# EUROPEAN PATENT APPLICATION

(11) **EP 4 389 325 A1**
(43) Date of publication of application: **26.06.2024**
(21) Application number: 21955087.8
(22) Date of filing: 27.08.2021
(51) Int. Cl.: B23B 3/06, B23B 7/02, B23B 13/12, B23B 19/02, B23B 31/20

(54) **WORKPIECE SUPPORT DEVICE FOR MACHINE TOOL, MACHINE TOOL, AND METHOD FOR USING MACHINE TOOL**

(71) Applicant: Yamazaki Mazak Corporation, Niwa-gun, Aichi 480-0197 (JP)
(72) Inventor: KIMURA, Jojiro, Niwa-gun, Aichi 480-0197 (JP); YAMANE, Hiroshi, Niwa-gun, Aichi 480-0197 (JP); KONDO, Hiroshi, Niwa-gun, Aichi 480-0197 (JP); MIYASHITA, Yuta, Niwa-gun, Aichi 480-0197 (JP)
(74) Representative: TBK
(86) International application number: PCT/JP2021/031541
(87) International publication number: WO 2023/026477

(57) **Abstract**

A workpiece support for a machine tool includes a rotating shaft configured to support a workpiece and rotatable about a first axis, a first support that has a through hole capable of supporting a guide bushing adapter and that is configured to receive a leading end portion of the rotating shaft in the through hole, a second support supporting the rotating shaft and configured to move the rotating shaft in a direction parallel to the first axis relative to the first support, and an attachment provided in contact with an outer surface of the leading end portion of the rotating shaft or an inner surface of the through hole. At least a part of the attachment provided at the rotating shaft is displaceable in a direction away from the first axis, or at least the part of the attachment provided in the through hole is displaceable in a direction toward the first axis.

## Description

### Technical Field

The present invention relates to a workpiece support for a machine tool, a machine tool, and a method of using a machine tool.

### Background Art

A machine tool is known to machine an elongate workpiece while restricting bending of the workpiece using a guide bushing.

As a related technique, Patent Literature 1 discloses a spindle movable lathe. The spindle movable lathe recited in Patent Literature 1 includes a spindle that holds a workpiece, a headstock, a guide bushing holder provided at a forward position relative to the spindle and including a guide bushing configured to slidably guide the workpiece, and a support base on which the guide bushing holder is mounted. The guide bushing holder is removable relative to the support base. Also in the spindle movable lathe recited in Patent Literature 1, instead of the guide bushing holder, a cover member is attachable at a position corresponding to the guide bushing. The cover member has a protection hole in which a leading end portion of the spindle is insertable.

### Citation List

### Patent Literature

PTL 1: JP 9-225703 A

### Summary of Invention

### Technical Problem

It is an object of the present invention to provide a provide a workpiece support for a machine tool, a machine tool, and a method of using a machine tool. The workpiece support, the machine tool, and the method restrict bending of a rotating shaft with the rotating shaft provided in a through hole capable of supporting a guide bushing adapter.

### Solution to Problem

According to some embodiments of the present invention, a workpiece support for a machine tool includes a rotating shaft configured to support a workpiece and rotatable about a first axis, a first support that has a through hole capable of supporting a guide bushing adapter configured to hold a guide bushing and that is configured to receive a leading end portion of the rotating shaft in the through hole, a second support supporting the rotating shaft and configured to move the rotating shaft in a direction parallel to the first axis relative to the first support, and an attachment provided in contact with an outer surface of the leading end portion of the rotating shaft or an inner surface of the through hole. At least a part of the attachment is displaceable in a direction away from the first axis so that a first distance between the first axis and an outermost portion of the attachment provided at the leading end portion of the rotating shaft is larger than a second distance between the first axis and an outermost surface of the leading end portion of the rotating shaft, or at least the part of the attachment is displaceable in a direction toward the first axis so that a third distance between the first axis and an innermost portion of the attachment provided in the through hole is smaller than a fourth distance between the first axis and an innermost surface of the through hole.

According to some embodiments of the present invention, a machine tool includes a workpiece support, a tool holder configured to hold a tool, and a second drive configured to move the tool holder. The workpiece support includes a rotating shaft configured to support a workpiece and rotatable about a first axis, a first support that has a through hole capable of supporting a guide bushing adapter configured to hold a guide bushing and that is configured to receive a leading end portion of the rotating shaft in the through hole, a second support supporting the rotating shaft and configured to move the rotating shaft in a direction parallel to the first axis relative to the first support, and an attachment provided in contact with an outer surface of the leading end portion of the rotating shaft or an inner surface of the through hole. At least a part of the attachment is displaceable in a direction away from the first axis so that a first distance between the first axis and an outermost portion of the attachment provided at the leading end portion of the rotating shaft is larger than a second distance between the first axis and an outermost surface of the leading end portion of the rotating shaft. At least the part of the attachment is displaceable in a direction toward the first axis so that a third distance between the first axis and an innermost portion of the attachment provided in the through hole is smaller than a fourth distance between the first axis and an innermost surface of the through hole.

According to some embodiments of the present invention, a method of using a machine tool is provided. The machine tool includes a workpiece support, a tool holder configured to hold a tool, and a second drive configured to move the tool holder. The workpiece support includes a rotating shaft rotatable about a first axis, a first support that has a through hole capable of supporting a guide bushing adapter configured to hold a guide bushing and that is configured to receive a leading end portion of the rotating shaft in the through hole, a second support supporting the rotating shaft and configured to move the rotating shaft in a direction parallel to the first axis relative to the first support, and an attachment provided in contact with an outer surface of the leading end portion of the rotating shaft or an inner surface of the through hole. The method includes a first rotating step of rotating a first workpiece about the first axis with the first workpiece held by the leading end portion of the rotating shaft and supported by the guide bushing. While performing the first rotating step, a first machining step of machining the first workpiece using the tool is performed. A removing step of removing the guide bushing adapter from the through hole is performed. A providing step of moving the rotating shaft in the direction parallel to the first axis is performed to provide the leading end portion of the rotating shaft at an interior of the through hole. A second rotating step of rotating the leading end portion of the rotating shaft about the first axis together with a second workpiece held by the leading end portion is performed. While performing the second rotating step, a second machining step of machining the second workpiece using the tool is performed. The second machining step is performed in a state in which a first distance between the first axis and an outermost portion of the attachment provided at the leading end portion of the rotating shaft is larger than a second distance between the first axis and an outermost surface of the leading end portion of the rotating shaft, or a third distance between the first axis and an innermost portion of the attachment provided in the through hole is smaller than a fourth distance between the first axis and an innermost surface of the through hole.

### Effects of Invention

The present invention provides a workpiece support for a machine tool, a machine tool, and a method of using a machine tool. The workpiece support, the machine tool, and the method restrict bending of a rotating shaft with the rotating shaft provided in a through hole capable of supporting a guide bushing adapter.

### Brief Description of Drawings

[FIG. 1] FIG. 1 is a cross-sectional view of a machine tool according to a first embodiment, schematically illustrating the machine tool.
[FIG. 2] FIG. 2 is a cross-sectional view of the machine tool according to the first embodiment, schematically illustrating the machine tool.
[FIG. 3] FIG. 3 is a cross-sectional view of the machine tool according to the first embodiment, schematically illustrating the machine tool.
[FIG. 4] FIG. 4 is a cross-sectional view of a part of the machine tool according to the first embodiment, schematically illustrating the part.
[FIG. 5] FIG. 5 is a cross-sectional view of a part of the machine tool according to the first embodiment, schematically illustrating the part.
[FIG. 6] FIG. 6 is an enlarged view of a region A surrounded by a quadrangular single-dashed line in FIG. 5.
[FIG. 7] FIG. 7 is an enlarged view of the region A surrounded the quadrangular single-dashed line in FIG. 5.
[FIG. 8] FIG. 8 illustrates an example of an attachment.
[FIG. 9] FIG. 9 is a cross-sectional view cut along a plane indicated by the arrow B-B in FIG. 8.
[FIG. 10] FIG. 10 illustrates another example of the attachment.
[FIG. 11] FIG. 11 is a cross-sectional view cut along a plane indicated by the arrow C-C in FIG. 10.
[FIG. 12] FIG. 12 schematically illustrates an example of a nut.
[FIG. 13] FIG. 13 is a cross-sectional view of a part of the machine tool according to the first embodiment, schematically illustrating the part.
[FIG. 14] FIG. 14 is a cross-sectional view of the machine tool according to the first embodiment, schematically illustrating the machine tool.
[FIG. 15] FIG. 15 is a cross-sectional view of the machine tool according to a modification of the first embodiment, schematically illustrating the machine tool.
[FIG. 16] FIG. 16 is an enlarged view of a region D surrounded by a quadrangular single-dashed line in FIG. 15.
[FIG. 17] FIG. 17 is a cross-sectional view of the machine tool according to a modification of the first embodiment, schematically illustrating the machine tool.
[FIG. 18] FIG. 18 is an enlarged view of a region E surrounded by a quadrangular single-dashed line in FIG. 17.
[FIG. 19] FIG. 19 is a cross-sectional view of a machine tool according to a second embodiment, schematically illustrating the machine tool.
[FIG. 20] FIG. 20 is a cross-sectional view of a part of the machine tool according to the second embodiment, schematically illustrating the part.
[FIG. 21] FIG. 21 is a cross-sectional view of the machine tool according to the second embodiment, schematically illustrating the machine tool.
[FIG. 22] FIG. 22 is a cross-sectional view of a part of the machine tool according to the second embodiment, schematically illustrating the part.
[FIG. 23] FIG. 23 is an enlarged view of a region H surrounded by a quadrangular single-dashed line in FIG. 22.
[FIG. 24] FIG. 24 is an enlarged view of a region F surrounded by a quadrangular single-dashed line in FIG. 20.
[FIG. 25] FIG. 25 is a cross-sectional view of a machine tool according to a third embodiment, schematically illustrating the machine tool.
[FIG. 26] FIG. 26 is a cross-sectional view of the machine tool according to the third embodiment, schematically illustrating the machine tool.
[FIG. 27] FIG. 27 is an enlarged view of a region N surrounded by a quadrangular single-dashed line in FIG. 26.
[FIG. 28] FIG. 28 is an enlarged view of a region N surrounded by a quadrangular single-dashed line in FIG. 26.
[FIG. 29] FIG. 29 is a cross-sectional view of the machine tool according to the third embodiment, schematically illustrating the machine tool.
[FIG. 30] FIG. 30 is a cross-sectional view of a part of a machine tool according to a first modification of the first embodiment, schematically illustrating the part.
[FIG. 31] FIG. 31 illustrates an example procedure for attaching an attachment to a leading end portion of a rotating shaft.
[FIG. 32] FIG. 32 is a flowchart of an example method according to an embodiment of using a machine tool.
[FIG. 33] FIG. 33 is a flowchart of the example method according to the embodiment of using the machine tool.

### Description of Embodiments

By referring to the accompanying drawings, description will be made with regard to a workpiece support 1 according to an embodiment for a machine tool, a machine tool 100 according to an embodiment, and a method according to an embodiment of using a machine tool. It is noted that in the following description of the embodiments, identical reference numerals are used to denote identical portions, members, or components having identical functions, and redundant description of identical portions, members, or components will be prevented or restricted.

### (Definitions of Directions)

As used herein, the direction from a rear end portion 21 of a rotating shaft 2 toward a leading end portion 22 of the rotating shaft 2 will be defined as "first direction *DR1*", and the direction from the leading end portion 22 of the rotating shaft 2 toward the rear end portion 21 of the rotating shaft 2 will be defined as "second direction DR2".

### (First Embodiment)

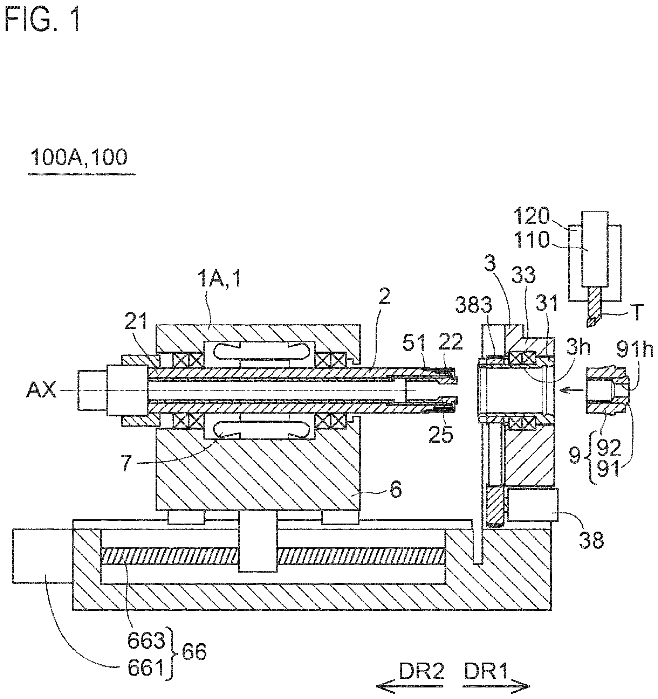

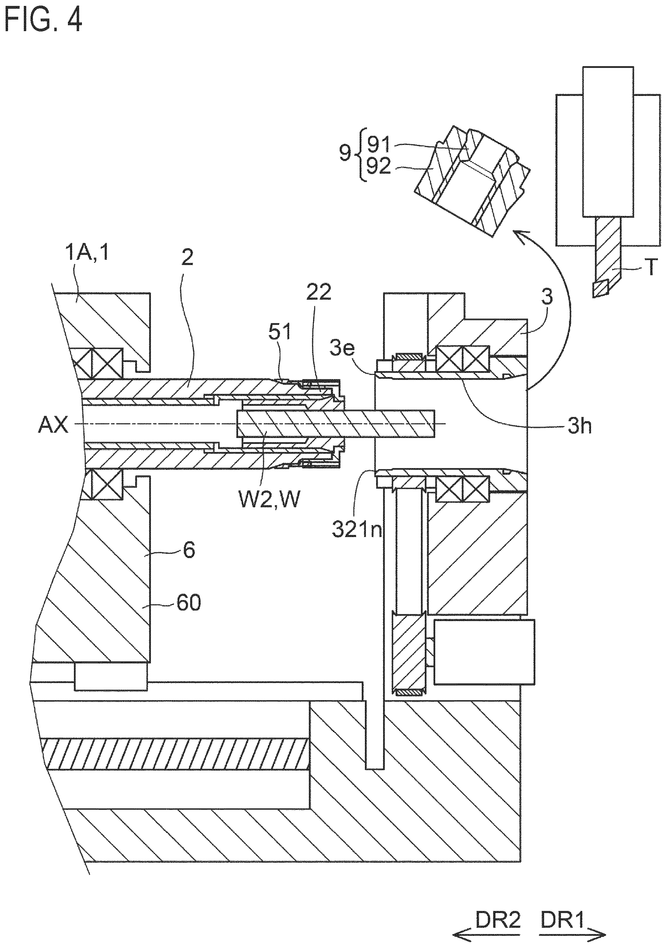

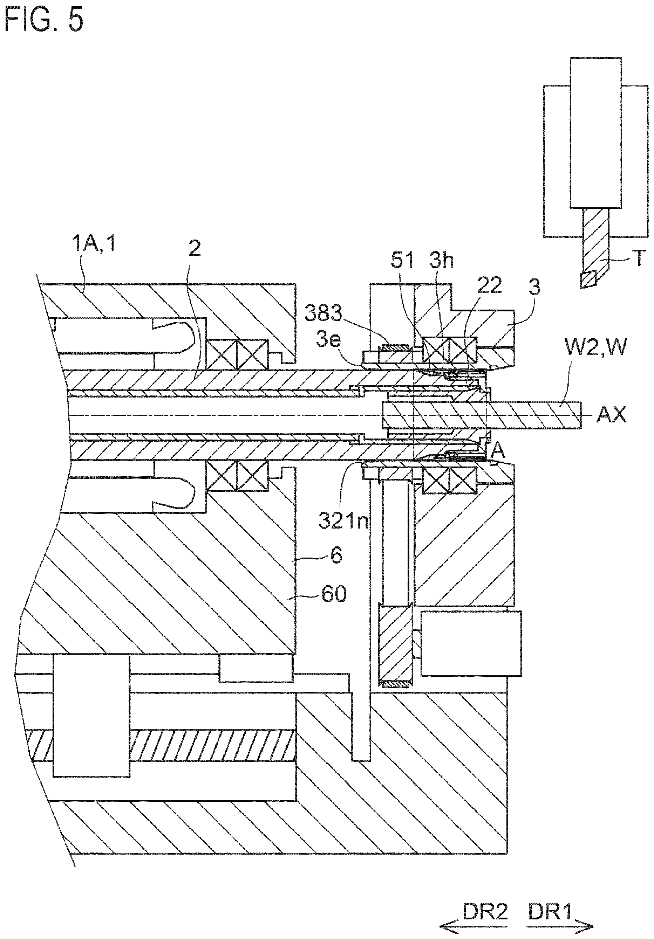

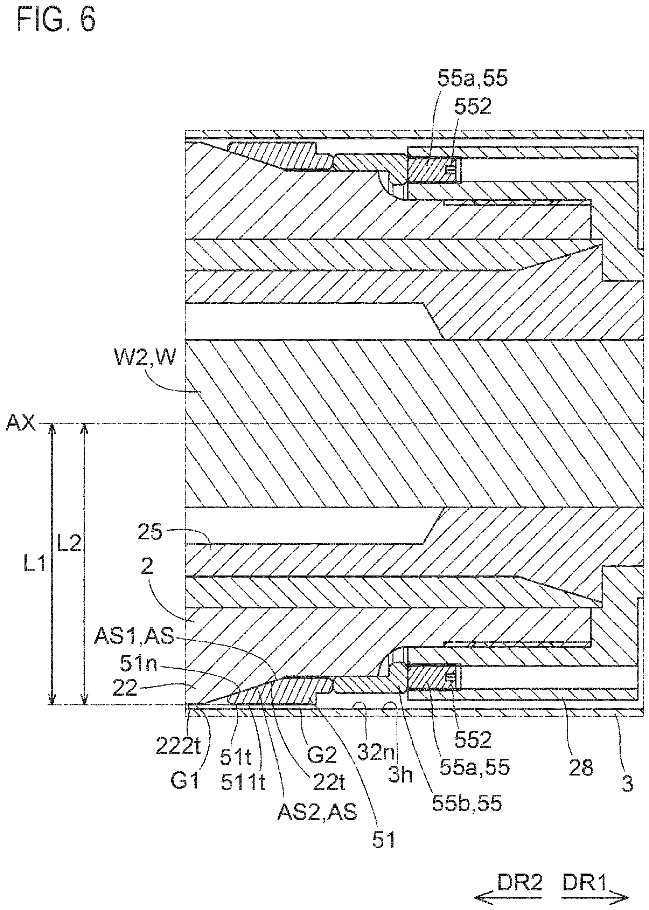

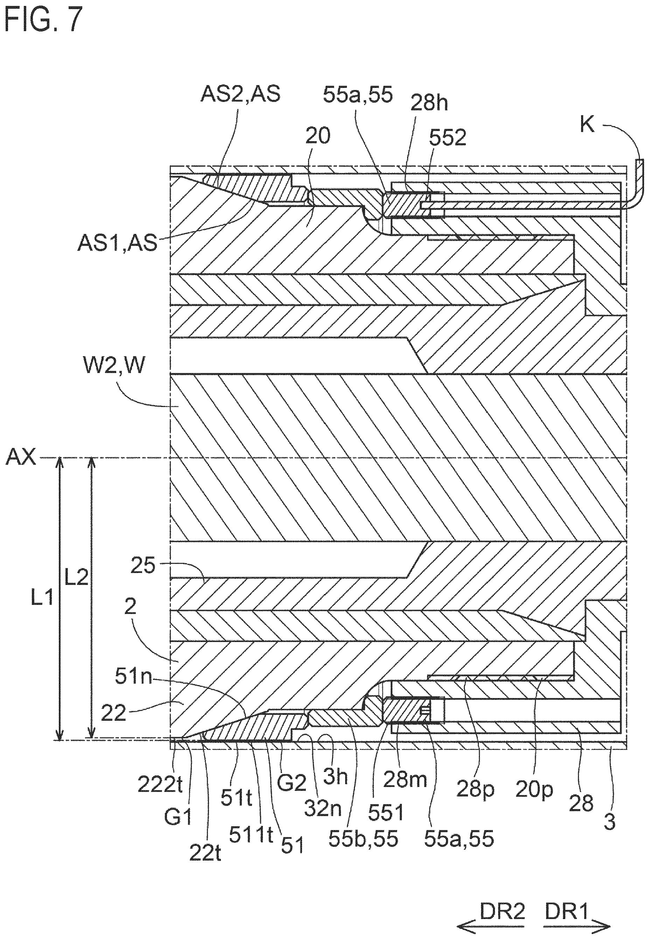

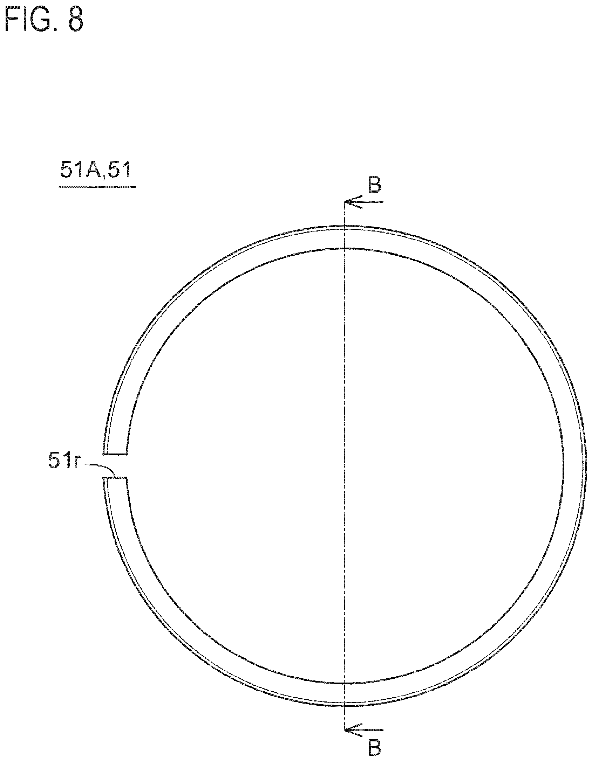

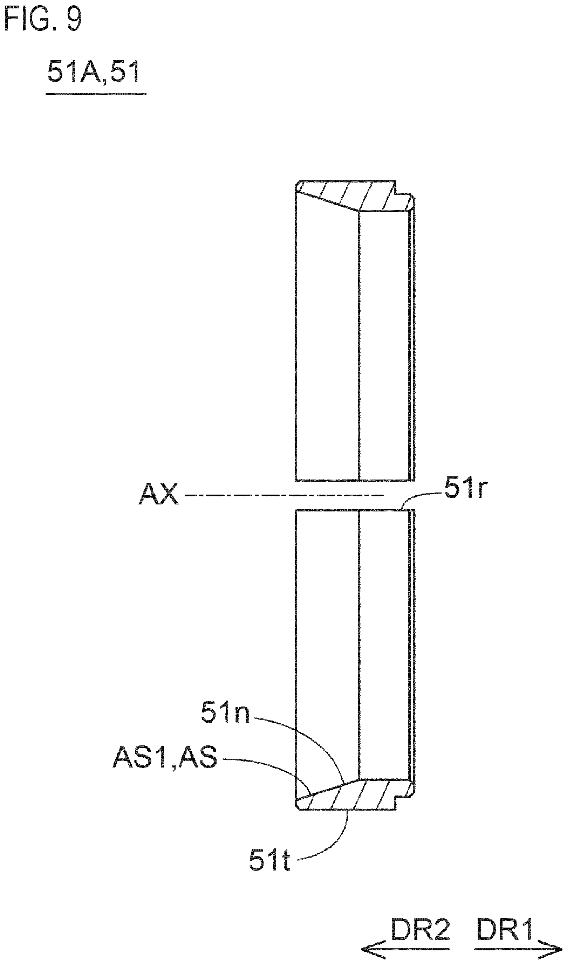

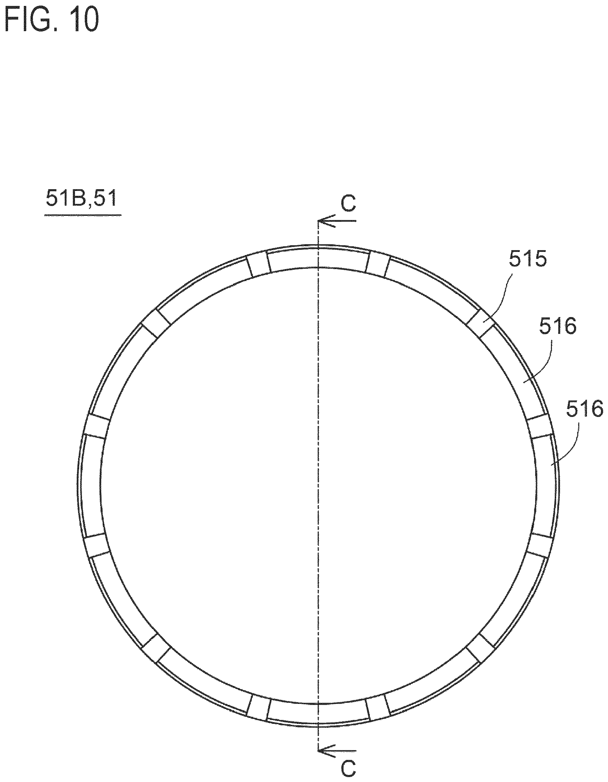

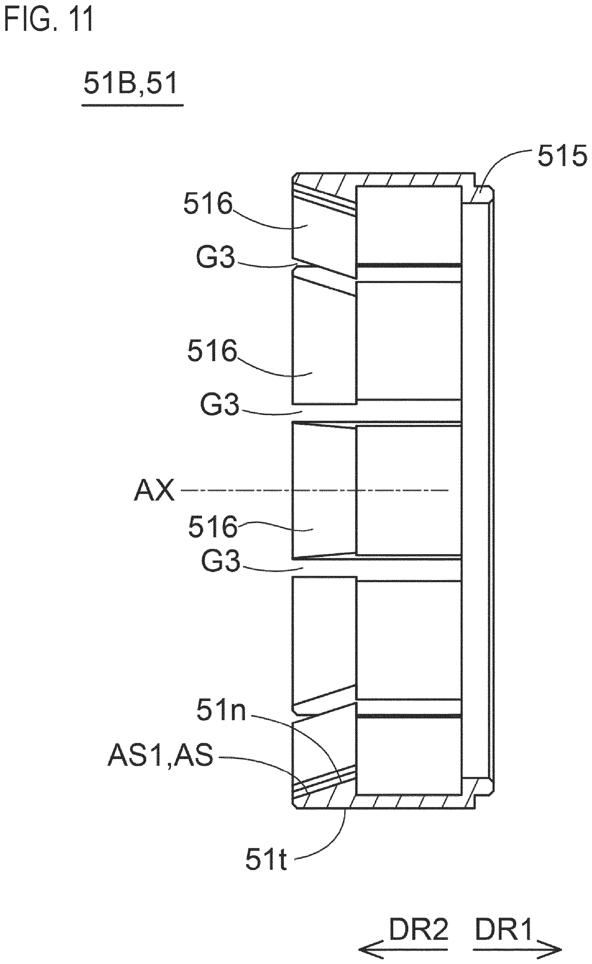

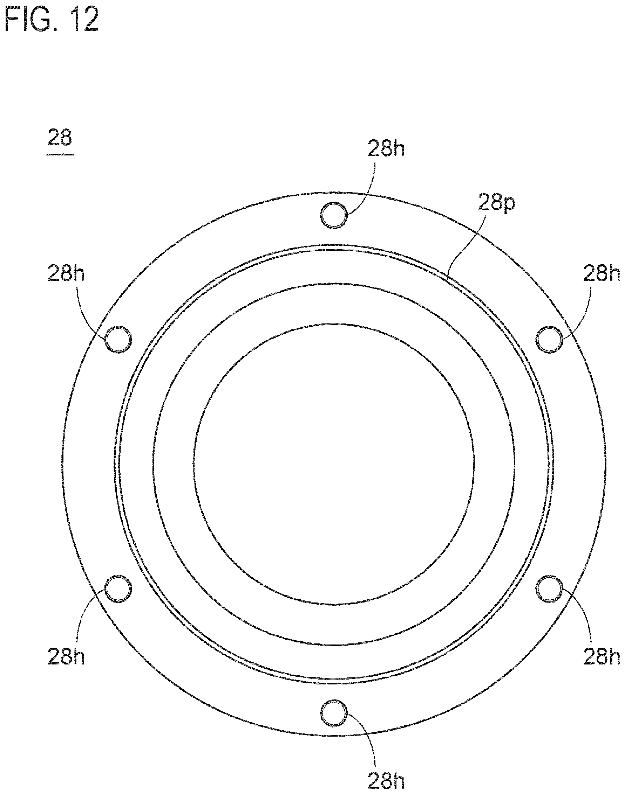

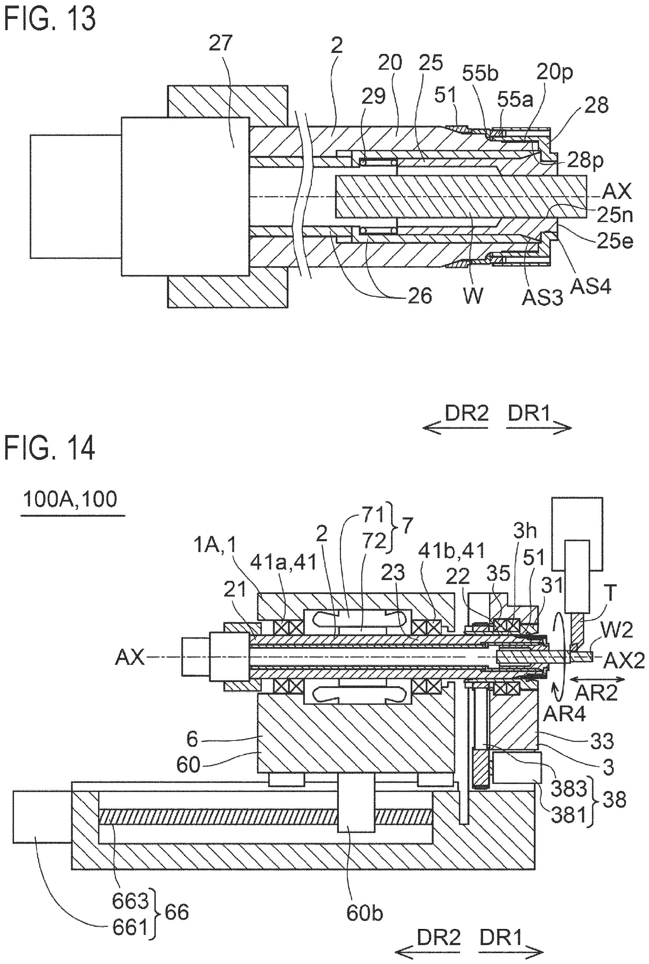

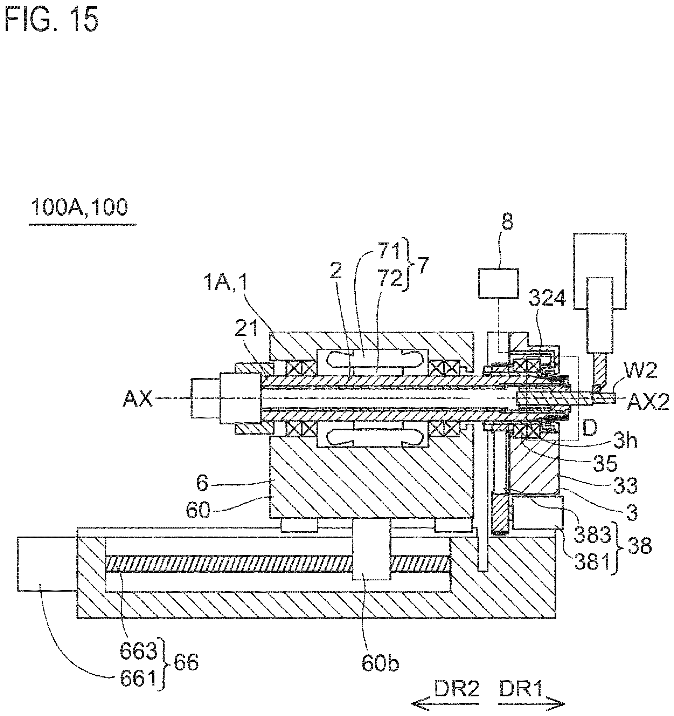

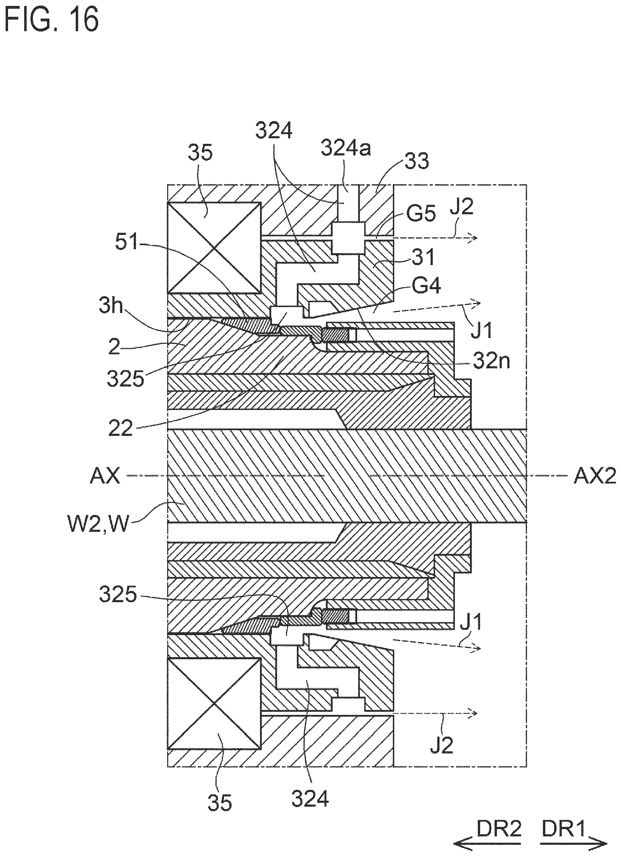

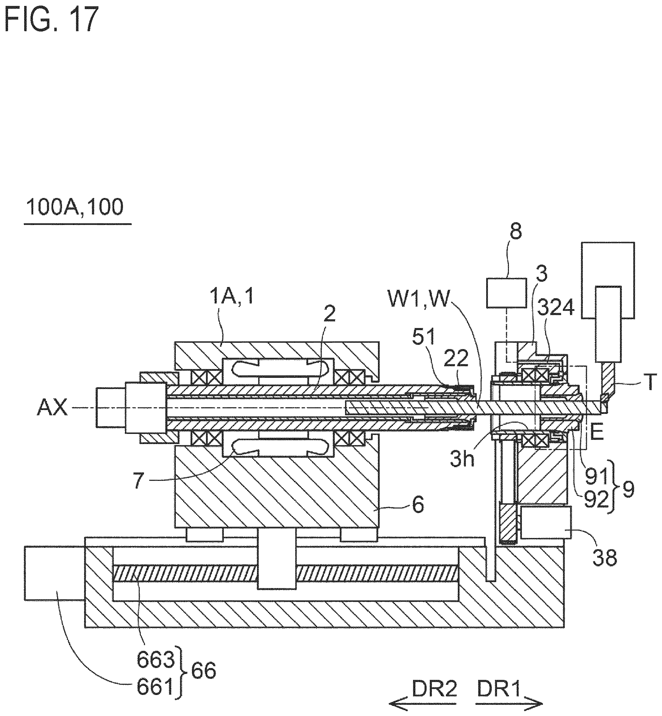

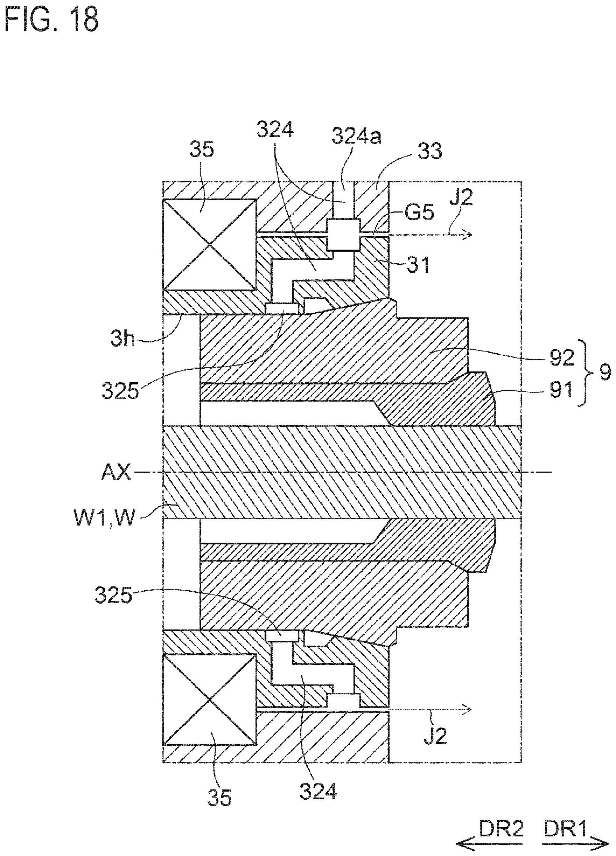

By referring to FIGs. 1 to 18, a workpiece support 1A according to the first embodiment for a machine tool, and the machine tool 100A according to the first embodiment will be described. FIGs. 1 to 3 are cross-sectional views of the machine tool 100A according to the first embodiment, schematically illustrating the machine tool 100A. FIGs. 4 and 5 are cross-sectional views of a part of the machine tool 100A according to the first embodiment, schematically illustrating the part. FIG. 6 is an enlarged view of a region A surrounded by a quadrangular single-dashed line in FIG. 5. FIG. 7 is an enlarged view of the region A surrounded by a quadrangular single-dashed line in FIG. 5. It is to be noted that FIG. 7 illustrates a state after an attachment 51 in FIG. 6 has been displaced in a direction away from a first axis AX. FIG. 8 illustrates an example of the attachment 51. FIG. 9 is a cross-sectional view cut along a plane indicated by the arrow B-B in FIG. 8. FIG. 10 illustrates another example of the attachment 51. FIG. 11 is a cross-sectional view cut along a plane indicated by the arrow C-C in FIG. 10. FIG. 12 schematically illustrates an example of a nut 28. FIG. 13 is a cross-sectional view of a part of the machine tool 100A according to the first embodiment, schematically illustrating the part. FIG. 14 is a cross-sectional view of the machine tool 100A according to the first embodiment, schematically illustrating the machine tool. FIG. 15 is a cross-sectional view of the machine tool 100A according to a modification of the first embodiment, schematically illustrating the machine tool. FIG. 16 is an enlarged view of a region D surrounded by a quadrangular single-dashed line in FIG. 15. FIG. 17 is a cross-sectional view of the machine tool 100A according to the modification of the first embodiment, schematically illustrating the machine tool. FIG. 18 is an enlarged view of a region E surrounded by a quadrangular single-dashed line in FIG. 17.

The workpiece support 1A according to the first embodiment for a machine tool includes the rotating shaft 2, a first support 3, a second support 6, and the attachment 51.

The rotating shaft 2 supports a workpiece (in other words, to-be-worked object) and is rotatable about the first axis AX. The rotating shaft 2 has the rear end portion 21 and the leading end portion 22. In the example illustrated in FIG. 1, a collet 25 is provided at the leading end portion 22 of the rotating shaft 2. In this case, the rotating shaft 2 supports the workpiece via the collet 25.

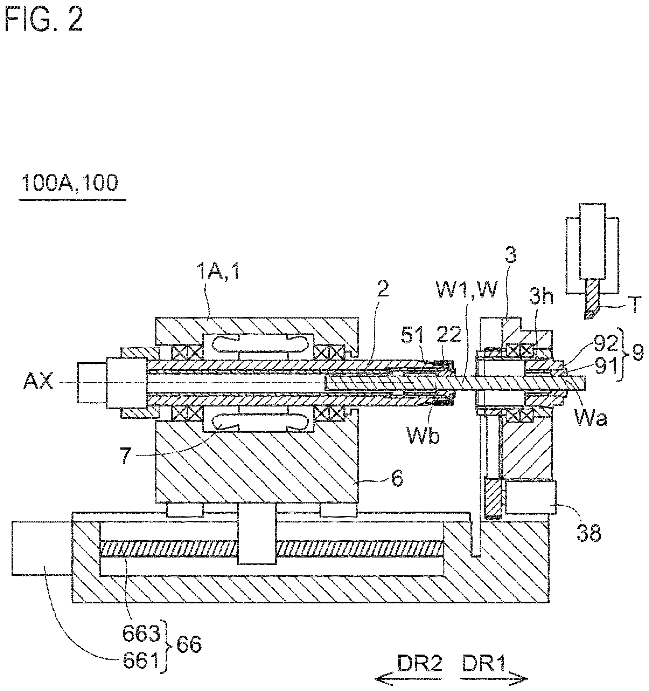

The first support 3 has a through hole 3h. The through hole 3h is capable of supporting a guide bushing unit 9. More specifically, the through hole 3h is capable of supporting a guide bushing adapter 92. The guide bushing adapter 92 holds a guide bushing 91. To the through hole 3h, the guide bushing adapter 92 is attachable. FIG. 1 illustrates a state before the guide bushing adapter 92 is attached to the through hole 3h of the first support 3. FIG. 2 illustrates a state after the guide bushing adapter 92 is attached to the through hole 3h of the first support 3.

In the example illustrated in FIG. 1, the guide bushing unit 9 is made up of a plurality of members. More specifically, the guide bushing unit 9 includes the guide bushing 91 and the guide bushing adapter 92, which holds the guide bushing 91. The guide bushing 91 has a through hole 91h. Through the through hole 91h, the workpiece is inserted. The guide bushing 91 is held by the guide bushing adapter 92 by way of fitting, engagement, or any fixing member such as a securing pin. The guide bushing adapter 92 is also mounted on the first support 3 by way of fitting, engagement, or any fixing member such as a securing pin.

In the example illustrated in FIG. 2, a first portion Wa of a workpiece W (more specifically, the leading end portion of the workpiece W) is supported by the guide bushing 91 movably in the first direction *DR1* relative to the guide bushing 91. Also, a second portion Wb of the workpiece W (more specifically, a longitudinal center portion of the workpiece W or a base end portion of the workpiece W) is held by the rotating shaft 2.

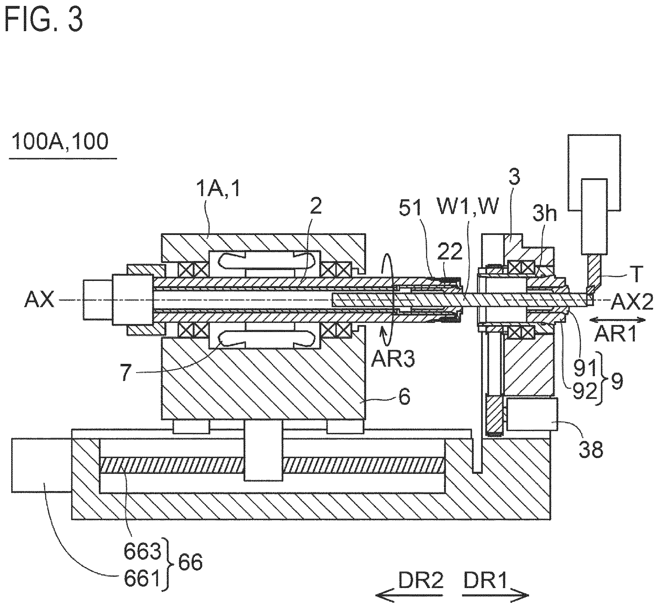

The second support 6 supports the rotating shaft 2. The second support 6 also moves the rotating shaft 2 relative to the first support 3 in a direction parallel to the first axis AX. Upon movement of the rotating shaft 2 in the direction parallel to the first axis AX relative to the first support 3, the workpiece W held by the rotating shaft 2 moves in the direction parallel to the first axis AX (see the arrow AR1 illustrated in FIG. 3). By moving the rotating shaft 2 in the direction parallel to the first axis AX, the second support 6 is capable of changing the machining position at which the workpiece W is machined by a tool T.

In the example illustrated in FIG. 3, the configuration in which the workpiece W is supported by the rotating shaft 2 and the guide bushing 91 restricts bending of the workpiece W during machining of the workpiece W. In other words, in the example illustrated in FIG. 3, an elongate workpiece supported by both the rotating shaft 2 and the guide bushing 91 is machined approximately (an "elongate workpiece" will be hereinafter referred to as "first workpiece W1"). In contrast, in a case where the rotating shaft 2 is provided in the manner exemplified in FIG. 3, it is difficult to machine a short workpiece (a "short workpiece" will be hereinafter referred to as "second workpiece W2").

In light of the difficulty, in the workpiece support 1A according to the first embodiment for a machine tool, the through hole 3h of the first support 3 is capable of receiving the leading end portion 22 of the rotating shaft 2. More specifically, as exemplified in FIG. 4, the guide bushing unit 9 is removed from the through hole 3h. Then, as exemplified in FIG. 5, the rotating shaft 2 is moved in the first direction *DR1.* In this manner, the leading end portion 22 of the rotating shaft 2 is inserted into the through hole 3h.

By moving the rotating shaft 2, the second support 6 is capable of moving the position of the leading end portion 22 of the rotating shaft 2 between a first position (see FIG. 4) and a second position (see FIG. 5). The first position is further at the second direction *DR2* side than the through hole 3h of the first support 3. The second position is further at the first direction *DR1* side than the interior of the through hole 3h or the through hole 3h. It is to be noted that in FIG. 4, the first position is an arbitrary position further in the second direction *DR2* than an end 3e of the through hole 3h of the first support 3 which end 3e is at the second direction *DR2* side. It is also to be noted that in FIG. 5, the second position is an arbitrary position further in the first direction *DR1* than the end 3e of the through hole 3h which end 3e is at the second direction *DR2* side.

When the position of the leading end portion 22 of the rotating shaft 2 is the second position (see FIG. 5), the second workpiece W2 held by the leading end portion 22 of the rotating shaft 2 can be machined by the tool T. However, as exemplified in FIG. 6, when the position of the leading end portion 22 of the rotating shaft 2 is at the interior of the through hole 3h, there is a gap G1 between an outermost surface 222t of the leading end portion 22 and an inner surface 32n of the through hole 3h. Due to the presence of the gap G1, the degree of bending of the rotating shaft 2 increases when the tool T applies a great machining load on the second workpiece W2. For example, there is a possibility of the rotating shaft 2 bending until the outermost surface 222t of the leading end portion 22 of the rotating shaft 2 contacts the inner surface 32n of the through hole 3h. Therefore, applying a great machining load from the tool T on the second workpiece W2 degrades the machining accuracy of the second workpiece W2.

In light of the circumstances, the workpiece support 1A for a machine tool includes the attachment 51. The attachment 51 is provided in contact with an outer surface 22t of the leading end portion 22 of the rotating shaft 2. In the example illustrated in FIG. 6, the attachment 51 is attached to the leading end portion 22 of the rotating shaft 2. It is to be noted that in this specification, the attachment 51 provided in contact with the outer surface 22t of the leading end portion 22 of the rotating shaft 2 may be referred to as "first attachment".

As exemplified in FIGs. 6 and 7, at least a part of the attachment 51 is displaceable in a direction away from the first axis AX. The configuration in which at least a part of the attachment 51 is displaceable in a direction away from the first axis AX reduces a gap G2 between an outer surface 51t of the attachment 51 and the inner surface 32n of the through hole 3h (see FIG. 7). Thus, the attachment 51 reduces the amount of displaceability of the leading end portion 22 of the rotating shaft 2 in a direction perpendicular to the first axis AX.

More specifically, at least a part of the attachment 51 is displaceable in a direction away from the first axis AX so that a first distance *L1* is larger than a second distance *L2.* The first distance *L1* is a distance between the first axis AX and an outermost portion 511t of the attachment 51, which is provided in contact with the outer surface 22t of the leading end portion 22 (in the example illustrated in FIG. 7, the outermost portion 511t of the attachment 51 is the outer surface 51t of the attachment 51). The second distance *L2* is a distance between the first axis AX and the outermost surface 222t of the leading end portion 22 of the rotating shaft 2. It is to be noted that the outermost portion 511t of the attachment 51 is intended to mean a portion, among the portions of the attachment 51, that is largest in distance from the first axis AX. It is also to be noted that the outermost surface 222t of the leading end portion 22 of the rotating shaft 2 is intended to mean a portion, among the portions of the outer surface of the leading end portion 22 of the rotating shaft 2, that is largest in distance from the first axis AX.

In the example illustrated in FIG. 7, the configuration in which the first distance *L1* is larger than the second distance *L2* enables the attachment 51 to prevent direct contact between the outermost surface 222t of the leading end portion 22 of the rotating shaft 2 and the inner surface 32n of the through hole 3h. In other words, when the rotating shaft 2 bends, the outermost portion 511t of the attachment 51 contacts the inner surface 32n of the through hole 3h before the outermost surface 222t of the leading end portion 22 of the rotating shaft 2 contacts the inner surface 32n of the through hole 3h. Thus, the amount of displaceability of the leading end portion 22 in the direction perpendicular to the first axis AX is reduced.

In the workpiece support 1A according to the first embodiment for a machine tool, the through hole 3h of the first support 3 is capable of supporting the guide bushing unit 9. This ensures that the elongate workpiece (in other words, the first workpiece W1) can be stably supported by the leading end portion 22 of the rotating shaft 2 and the guide bushing 91. Also in the workpiece support 1A according to the first embodiment for a machine tool, the through hole 3h of the first support 3 is capable of receiving the leading end portion 22 of the rotating shaft 2. This ensures that the short workpiece (in other words, the second workpiece W2) can be supported by the leading end portion 22 of the rotating shaft 2 inserted in the through hole 3h. Also, the workpiece support 1A according to the first embodiment for a machine tool includes the attachment 51, which is provided in contact with the outer surface 22t of the leading end portion 22 of the rotating shaft 2. The attachment 51 prevents direct contact between the outermost surface 222t of the leading end portion 22 of the rotating shaft 2 and the inner surface 32n of the through hole 3h. In this manner, bending of the rotating shaft 2 is restricted when the tool T applies a machining load on the second workpiece W2. As a result, in the first embodiment, even when a great machining load is applied on the second workpiece W2, bending of the rotating shaft 2 is restricted, ensuring that the machining accuracy of the second workpiece W2 is stably maintained.

As exemplified in FIG. 1, the machine tool 100A according to the first embodiment includes, in addition to the workpiece support 1A for a machine tool: a tool holder 110, which holds the tool T; and a second drive 120, which moves the tool holder 110. The second drive 120 is capable of moving the tool holder 110 in a direction toward the first axis AX (or in a direction away from the first axis AX).

### (Optional Configurations)

Next, by referring to FIGs. 1 to 18, description will be made with regard to optional configurations employable in the workpiece support 1A according to the first embodiment for a machine tool and in the machine tool 100A according to the first embodiment.

### (Attachment 51)

In the example illustrated in FIG. 7, the attachment 51 is provided between the outer surface 22t of the rotating shaft 2 and the inner surface 32n of the through hole 3h. The attachment 51 has an inner surface 51n, which is in contact with the outer surface 22t of the rotating shaft 2, and the outer surface 51t, which faces the inner surface 32n of the through hole 3h.

From the viewpoint of smoothly moving the rotating shaft 2 in a direction parallel to the first axis AX relative to the through hole 3h, a small gap G2 is preferably formed between the outer surface 51t of the attachment 51 and the inner surface 32n of the through hole 3h. It is to be noted, however, that in a case where the contact between the outer surface 51t of the attachment 51 and the inner surface 32n of the through hole 3h does not interfere with the movement of the rotating shaft 2 in the direction parallel to the first axis AX, the gap G2 between the outer surface 51t and the inner surface 32n may be zero. It is also to be noted that a rolling element such as a ball and a roller or an elastic element such as an O-ring may be provided at one of the outer surface 51t of the attachment 51 and the inner surface 32n of the through hole 3h.

In the examples illustrated in FIGs. 6 and 7, the state of the attachment 51, which is provided at the leading end portion 22 of the rotating shaft 2, is changeable from a first state (see FIG. 6) to a second state (see FIG. 7). The first state is a state in which the first distance *L1* between the first axis AX and the outermost portion 511t of the attachment 51 is equal to or smaller than the second distance *L2* between the first axis AX and the outermost surface 222t of the leading end portion 22 of the rotating shaft 2. The second state is a state in which the first distance *L1* between the first axis AX and the outermost portion 511t of the attachment 51 is larger than the second distance *L2* between the first axis AX and the outermost surface 222t of the leading end portion 22 of the rotating shaft 2. In the first embodiment, however, the configuration in which the first state (see FIG. 6) can be realized is not essential.

In the example illustrated in FIG. 6, at least one of the attachment 51 and the rotating shaft 2 has an inclined surface AS. The inclined surface AS converts the movement of the attachment 51 in a direction parallel to the first axis AX relative to the rotating shaft 2 into a displacement of at least a part of the attachment 51 (for example, the outer surface 51t of the attachment 51) in a direction away from the first axis AX. In this case, by moving the attachment 51 in the direction parallel to the first axis AX (more specifically, the second direction *DR2*) relative to the rotating shaft 2, the gap G2 between the outer surface 51t of the attachment 51 and the inner surface 32n of the through hole 3h reduces. By reducing the gap G2, the amount of displaceability of the leading end portion 22 of the rotating shaft 2 in the direction perpendicular to the first axis AX reduces.

In the example illustrated in FIG. 6, the attachment 51 has a wedge shape in a cross-section including the first axis AX. More specifically, an end portion of the attachment 51 at the second direction *DR2* side has a wedge shape that becomes smaller in thickness in the second direction *DR2.* In the example illustrated in FIG. 6, the inner surface 51n of the attachment 51 has a first inclined surface AS1, and the outer surface 22t of the rotating shaft 2 has a second inclined surface AS2. The second inclined surface AS2 is in contact with the first inclined surface AS 1. The first inclined surface AS 1 is an inclined surface that increases in distance from the first axis AX in the second direction *DR2.* The second inclined surface AS2 is also an inclined surface that increases in distance from the first axis AX in the second direction *DR2.* In this case, by moving the attachment 51 in the second direction *DR2* relative to the rotating shaft 2, at least a part of the attachment 51 (for example, the outer surface 51t of the attachment 51) is displaced in a direction away from the first axis AX. It is to be noted that a rolling element such as a ball and a roller or an elastic element such as an O-ring may be provided at one of the inner surface 51n of the attachment 51 and the outer surface 22t of the rotating shaft 2.

In the example illustrated in FIG. 6, at least a part of the attachment 51 is enlargeable in diameter in a direction away from the first axis AX. More specifically, at least a part of the attachment 51, which is provided at the leading end portion 22 of the rotating shaft 2, is enlargeable in diameter in a direction away from the first axis AX so that the first distance *L1* between the first axis AX and the outermost portion 511t of the attachment 51 is larger than the second distance *L2* between the first axis AX and the outermost surface 222t of the leading end portion 22 of the rotating shaft 2. FIG. 7 illustrates a state in which at least a part of the attachment 51 is enlarged in diameter in a direction away from the first axis AX. In the example illustrated in FIG. 7, when the state of the attachment 51 is an enlarged diameter state, the attachment 51 has a first shape. The first shape is a shape elastically deformed from a default shape of the attachment 51.

In a case where at least a part of the attachment 51 (in other words, a part or whole of the attachment 51) is enlargeable in diameter in a direction away from the first axis AX, the gap G2 between the outer surface 51t of the attachment 51 and the inner surface 32n of the through hole 3h can be easily adjusted. It is to be noted that at least a part of the attachment 51 may be enlarged in diameter after the attachment 51 has been inserted into the through hole 3h or before the attachment 51 is inserted into the through hole 3h.

In the example illustrated in FIG. 7, at least a part of the attachment 51 is diminishable in diameter in a direction toward the first axis AX. For example, at least a part of the attachment 51 is diminishable in diameter in a direction toward the first axis AX so that the first distance *L1* between the first axis AX and the outermost portion 511t of the attachment 51 is equal to or smaller than the second distance *L2* between the first axis AX and the outermost surface 222t of the leading end portion 22 of the rotating shaft 2. FIG. 6 illustrates a state in which at least a part of the attachment 51 is diminished in diameter in a direction toward the first axis AX. In the example illustrated in FIG. 6, when the state of the attachment 51 is a diminished diameter state, the attachment 51 has a substantially stress free, default shape or has a second shape, which is smaller in the degree of elastic deformation from the default shape than the first shape.

The attachment 51 includes, for example, a ring member. It is to be noted that in this specification, the term ring member encompasses a ring member having a cut (for example, a C-shaped ring member), a circular ring member, and a ring member made up of a plurality of ring divisions. In the examples illustrated in FIGs. 8 and 9, the attachment 51 has a ring member 51A. The ring member 51A has a C-shape in a view from a direction along the first axis AX. The ring member 51A has a cut 51r. In this case, a whole of the ring member 51A can be easily enlarged in diameter in a direction away from the first axis AX.

Alternatively, as exemplified in FIGs. 10 and 11, the attachment 51 may be a ring member 51B. The ring member 51B has a circular shape in a view from a direction along the first axis AX. In the example illustrated in FIG. 11, the circular ring member 51B includes a circular ring body 515 and a plurality of legs 516. The plurality of legs 516 extend in a direction along the first axis AX from the ring body 515. In the example illustrated in FIG. 11, a gap G3 is formed between adjacent two legs 516. In this case, a part of the ring member 51B (more specifically, the plurality of legs 516) can be easily enlarged in diameter in a direction away from the first axis AX.

It is to be noted that in the examples illustrated in FIGs. 8 to 11, the attachment 51 is made up of a single ring member. Alternatively, the attachment 51 may be made up of a plurality of ring divisions. In this case, grooves to hold the ring divisions or similar functioning members may be formed on the outer surface 22t of the rotating shaft 2 to prevent removal of the ring divisions from the outer surface 22t of the rotating shaft 2.

### (Pressing Member 55)

In the example illustrated in FIG. 6, the workpiece support 1A for a machine tool includes a pressing member 55. The pressing member 55 presses the attachment 51 in the second direction *DR2.* By pressing the attachment 51 in the second direction *DR2,* the pressing member 55 moves the attachment 51 in a direction parallel to the first axis AX (more specifically, the second direction *DR2*) relative to the rotating shaft 2. Also, by pressing the attachment 51 in the second direction *DR2* using the pressing member 55 to move the attachment 51 in the second direction *DR2,* the outer surface 51t of the attachment 51 is displaced in a direction toward the inner surface 32n of the through hole 3h (see FIG. 7). In this manner, the gap G2 between the outer surface 51t of the attachment 51 and the inner surface 32n of the through hole 3h reduces.

In the example illustrated in FIG. 6, by merely moving the pressing member 55 in the second direction *DR2,* the outer surface 51t of the attachment 51 is displaced in a direction toward the inner surface 32n of the through hole 3h. As a result, the gap G2 between the outer surface 51t of the attachment 51 and the inner surface 32n of the through hole 3h reduces.

In the example illustrated in FIG. 7, the pressing member 55 includes a first thread portion 551. The first thread portion 551 converts the rotational force acting on the pressing member 55 into a pressing force to press the attachment 51. In other words, the pressing member 55 includes a threaded member 55a. The threaded member 55a converts the rotational force acting on the pressing member 55 into a pressing force to press the attachment 51.

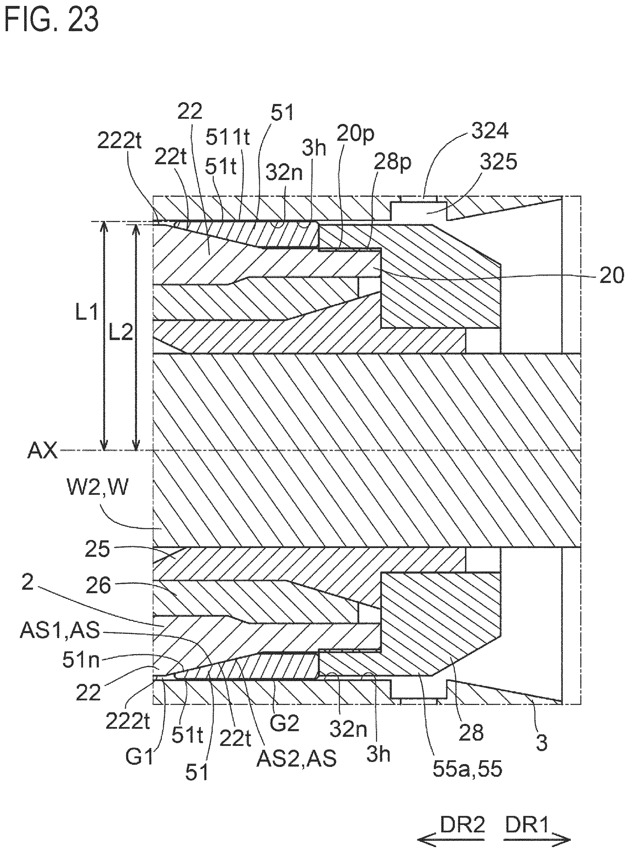

In the example illustrated in FIG. 7, the threaded member 55a is screwed with a second thread portion 28m of a member of the rotating shaft 2 (for example, the nut 28, which is screwed with a rotating shaft body 20). Also in the example illustrated in FIG. 7, the threaded member 55a is a bolt having a recess 552. The recess 552 is engageable with a tool K, such as a wrench and a driver. Alternatively, as exemplified in FIG. 23, the threaded member 55a may be the nut 28 (more specifically, a cap nut), which is screwed with the rotating shaft body 20.

In the example illustrated in FIG. 7, the pressing member 55 is made up of a plurality of members, and the pressing member 55 includes a cylindrical collar 55b. In the example illustrated in FIG. 7, the cylindrical collar 55b is provided between the threaded member 55a and the attachment 51. In this case, the threaded member 55a presses the attachment 51 in the second direction *DR2* via the collar 55b. The collar 55b may be omitted. In other words, the threaded member 55a may directly press the attachment 51 in the second direction *DR2*.

### (Nut 28)

In the example illustrated in FIG. 7, the workpiece support 1A for a machine tool includes the nut 28 (more specifically, a cap nut), which prevents removal of the attachment 51 from the rotating shaft 2. After the attachment 51 has been provided on the outer surface of the rotating shaft 2, the nut 28 is attached to a leading end portion of the rotating shaft body 20. In this manner, the nut 28 prevents movement of the attachment 51 in the first direction *DR1* beyond the nut 28. The nut 28 includes a female thread portion 28p. The female thread portion 28p is screwed with a male thread portion 20p of the rotating shaft body 20.

In the example illustrated in FIG. 7, the nut 28 includes a threaded hole 28h. In the threaded hole 28h, the threaded member 55a is inserted. By rotating the threaded member 55a relative to the threaded hole 28h, the threaded member 55a is moved in the second direction *DR2.* By moving the threaded member 55a in the second direction *DR2*, the threaded member 55a presses the attachment 51 in the second direction *DR2* via the collar 55b. By pressing the attachment 51 in the second direction *DR2* to move the attachment 51 in the second direction *DR2,* the outer surface 51t of the attachment 51 is displaced in a direction away from the first axis AX.

In the example illustrated in FIG. 12, the nut 28 has six threaded holes 28h, and six threaded members 55a can be provided in the respective six threaded holes. It is to be noted that the number of threaded holes 28h of the nut 28 will not be limited to six; any other number of threaded holes 28h may be provided. In the example illustrated in FIG. 12, the plurality of the threaded holes 28h are provided at equal angular intervals around the center axis of the nut 28.

### (Rotating Shaft 2)

In the example illustrated in FIG. 13, the rotating shaft 2 includes the rotating shaft body 20 and the collet 25, which holds the workpiece W. The rotating shaft 2 may include a collet operation shaft 26, an operation shaft drive 27, and/or the nut 28 (more specifically, a cap nut).

In the example illustrated in FIG. 13, the rotating shaft body 20 is a cylindrical member. The rotating shaft body 20 may be made up of a single member or may be made up of an assembly of a plurality of members. In the example illustrated in FIG. 13, the collet 25 and the collet operation shaft 26 are provided at an interior of the rotating shaft body 20, and the attachment 51 is provided at an outside of the rotating shaft body 20.

In the example illustrated in FIG. 13, the collet 25 has an inner surface 25n, which holds the workpiece W, and an inclined surface pressed by the collet operation shaft 26 (this inclined surface will be hereinafter referred to as "third inclined surface AS3").

The nut 28 includes the female thread portion 28p, which is screwed with the male thread portion 20p of the rotating shaft body 20. In the example illustrated in FIG. 13, the nut 28 prevents removal of the collet 25 from the rotating shaft body 20. The nut 28 also prevents removal of the attachment 51 and/or the collar 55b from the rotating shaft body 20. In other words, attaching the nut 28 to the rotating shaft body 20 prevents both removal of the collet 25 from the rotating shaft body 20 and removal of the attachment 51 from the rotating shaft body 20.

The collet operation shaft 26 has an inclined surface capable of pressing the third inclined surface AS3 of the collet 25 (this inclined surface will be hereinafter referred to as "fourth inclined surface AS4"). In the example illustrated in FIG. 13, upon movement of the collet operation shaft 26 in the first direction *DR1* relative to the collet 25, the fourth inclined surface AS4 of the collet operation shaft 26 presses the third inclined surface AS3 of the collet 25. As a result, the inner surface 25n of the collet 25 is displaced in a direction toward the first axis AX, and the workpiece W is held by the inner surface 25n of the collet 25. Also, upon the second support 6 moving the rotating shaft 2 in the first direction *DR1* with the collet 25 holding the workpiece W, the workpiece W moves in the first direction *DR1* together with the rotating shaft 2. Thus, by moving the rotating shaft 2 in the direction parallel to the first axis AX, the second support 6 is capable of changing the machining position at which the workpiece W is machined by the tool T. The leading end portion of the workpiece W that has been subjected to a predetermined type of machining may be separated from the rest of the workpiece W by cutting.

In the example illustrated in FIG. 13, upon movement of the collet operation shaft 26 in the second direction *DR2* relative to the collet 25, the inner surface 25n of the collet 25 is displaced in a direction away from the first axis AX, and the holding of the workpiece W by the collet 25 is released. With the holding of the workpiece W by the collet 25 released, the workpiece W is moved in the first direction *DR1* relative to the collet 25 by a workpiece feeder such as a bar feeder, not illustrated. As a result, the amount of protrusion of the workpiece W from a leading end portion 25e of the collet 25 increases (in other words, the workpiece W is taken beyond the leading end portion 25e of the collet 25).

The operation shaft drive 27 moves the collet operation shaft 26 in the first direction *DR1.* The operation shaft drive 27 may include a fluid pressure cylinder such as a hydraulic cylinder and an air cylinder, and/or may include a motor. Additionally, the operation shaft drive 27 may be capable of moving the collet operation shaft 26 in the second direction *DR2*. Alternatively, in a case where the rotating shaft 2 includes an urging member 29 (for example, a spring) to urge the collet operation shaft 26 in the second direction *DR2*, the collet operation shaft 26 may be moved in the second direction *DR2* utilizing the urging force of the urging member 29.

### (Movement of Leading End Portion 22 of Rotating Shaft 2 to Interior of Through Hole 3h)

In the examples illustrated in FIGs. 4 and 5, with the attachment 51 attached to the leading end portion 22 of the rotating shaft 2, the leading end portion 22 of the rotating shaft 2 is movable from an outside of the through hole 3h (see FIG. 4) to the interior of the through hole 3h (see FIG. 5).

More specifically, by moving the rotating shaft 2 in the first direction *DR1,* the second support 6 changes the position of the leading end portion 22 attached with the attachment 51 from the first position to the second position. The first position is further in the second direction *DR2* than the end 3e of the through hole 3h of the first support 3 which end 3e is at the second direction *DR2* side. The second position is further in the first direction *DR1* than the end 3e of the through hole 3h which end 3e is at the second direction *DR2* side.

In a case where the leading end portion 22 of the rotating shaft 2 is movable to the interior of the through hole 3h with the attachment 51 attached to the leading end portion 22 of the rotating shaft 2, it is not necessary to attach the attachment 51 to the leading end portion 22 of the rotating shaft 2 after the leading end portion 22 has been moved to the interior of the through hole 3h. This reduces the amount of work necessary for switching from machining of an elongate workpiece to machining of a short workpiece, and quickens the switch from machining of an elongate workpiece to machining of a short workpiece.

Also in the example illustrated in FIG. 3, with the attachment 51 attached to the leading end portion 22 of the rotating shaft 2, the first workpiece W 1 (in other words, an elongate workpiece) can be supported by both the leading end portion 22 of the rotating shaft 2 and the guide bushing 91. In this case, it is not necessary to remove the attachment 51 from the rotating shaft 2 at the time of machining of the elongate workpiece. This reduces the possibility of the attachment 51 being lost. Also, since it is not necessary to remove the attachment 51 from the rotating shaft 2, the amount of work necessary for switching from machining of a short workpiece to machining of an elongate workpiece reduces. This quickens the switch from machining of a short workpiece to machining of an elongate workpiece.

In the examples illustrated in FIGs. 4 and 5, the attachment 51 is attached to the leading end portion 22 of the rotating shaft 2 in both cases where the position of the leading end portion 22 of the rotating shaft 2 is the first position (see FIG. 4) and where the position of the leading end portion 22 is the second position (see FIG. 5). Alternatively, at the time of machining of an elongate workpiece, the attachment 51 may be removed from the leading end portion 22 of the rotating shaft 2, and at the time of machining of a short workpiece, the attachment 51 may be attached to the leading end portion 22 of the rotating shaft 2.

In the examples illustrated in FIGs. 6 and 7, after the leading end portion 22 of the rotating shaft 2 has been inserted into the through hole 3h, the outer surface 51t of the attachment 51 is displaced in a direction away from the first axis AX. In this case, at the time of inserting the leading end portion 22 of the rotating shaft 2 into the through hole 3h, catching of the attachment 51 by the end 3e (see FIG. 4) of the through hole 3h which end 3e is at the second direction *DR2* side is prevented or restricted. It is to be noted that as exemplified in FIG. 4, an end portion of the through hole 3h at the second direction *DR2* side may have a tapered inner surface 321n. The tapered inner surface 321n increases in distance from the first axis AX in the second direction *DR2.* In this case, at the time of inserting the leading end portion 22 into the through hole 3h, catching of the attachment 51 by the end 3e of the through hole 3h which end 3e is at the second direction *DR2* side is prevented or restricted further more effectively.

### (Slide of Leading End Portion 22 of Rotating Shaft 2 Relative to Through hole 3h)

In the example illustrated in FIG. 7, the leading end portion 22 of the rotating shaft 2 is permitted to slide relative to the through hole 3h of the first support 3 with the attachment 51 attached to the leading end portion 22 of the rotating shaft 2 (more specifically, in a state in which the first distance *L1* between the first axis AX and the outermost portion 511t of the attachment 51 is larger than the second distance *L2* between the first axis AX and the outermost surface 222t of the leading end portion 22 of the rotating shaft 2).

In this case, in a state in which the amount of displaceability of the leading end portion 22 of the rotating shaft 2 in a direction perpendicular to the first axis AX is restricted by the attachment 51, the second support 6 is capable of moving the rotating shaft 2 in a direction parallel to the first axis AX relative to the first support 3 (see the arrow AR2 illustrated in FIG. 14). This enables the second workpiece W2 to be machined by the tool T with bending of the second workpiece W2 restricted, and enables the machining position of the second workpiece W2 to be changed by moving the second workpiece W2 in the direction parallel to the first axis AX.

### (Second Support 6)

In the example illustrated in FIG. 14, the workpiece support 1A for a machine tool includes the second support 6, which supports the rotating shaft 2; a spindle motor 7, which rotates the rotating shaft 2 about the first axis AX; and a first bearing group 41.

The second support 6 includes a shaft support member 60. The shaft support member 60 supports, via the first bearing group 41, the rotating shaft 2 rotatably about the first axis AX. The shaft support member 60 is made up of a plurality of members.

The second support 6 also includes a first drive 66. The first drive 66 moves the shaft support member 60 in a direction parallel to the first axis AX. By the first drive 66 moving the shaft support member 60 in a direction parallel to the first axis AX, the rotating shaft 2 supported by the shaft support member 60 moves in the direction parallel to the first axis AX.

In the example illustrated in FIG. 14, the first drive 66 is capable of moving the rotating shaft 2, the shaft support member 60, and the spindle motor 7 in a direction parallel to the first axis AX relative to the first support 3.

In the example illustrated in FIG. 14, the first drive 66 includes a first motor 661 (for example, a servo motor) and a thread axis 663. The thread axis 663 is driven by the first motor 661. The shaft support member 60 is screwed with the thread axis 663 via a rolling element such as a ball and a roller (more specifically, a block 60b, which is a member of the shaft support member 60, is screwed with the thread axis 663 via a rolling element). In this case, upon rotation of the thread axis 663 by the first motor 661, the shaft support member 60 screwed with the thread axis 663 moves in a direction parallel to the first axis AX. Upon movement of the shaft support member 60 in a direction parallel to the first axis AX, the rotating shaft 2 supported by the shaft support member 60 also moves in a direction parallel to the first axis AX.

The first drive 66 will not be limited to the drive made up of the first motor 661 and the thread axis 663. As the first drive 66, it is possible to employ any other drive capable of moving the rotating shaft 2 in a direction parallel to the first axis AX. The first drive 66 may include the first motor 661 and a rack and pinion. Alternatively, the first drive 66 may include a linear motor.

The spindle motor 7 rotates the rotating shaft 2 about the first axis AX relative to the shaft support member 60. In the example illustrated in FIG. 14, the spindle motor 7 includes a stator 71 and a rotor 72. The stator 71 is provided at the shaft support member 60, and the rotor 72 is provided at the rotating shaft 2. The spindle motor 7 is a device that electromagnetically rotates the rotating shaft 2. Alternatively, the spindle motor 7 may be a device that rotates the rotating shaft 2 using, for example, a transmission belt.

The first bearing group 41 is provided between the shaft support member 60 and the rotating shaft 2. In the example illustrated in FIG. 14, the first bearing group 41 includes a first bearing 41a and a second bearing 41b. The first bearing 41a is provided between the shaft support member 60 and the rear end portion 21 of the rotating shaft 2. The second bearing 41b is provided between the shaft support member 60 and a center portion 23 of the rotating shaft 2. In the example illustrated in FIG. 14, the leading end portion 22 of the rotating shaft 2 protrudes in the first direction *DR1* beyond the shaft support member 60. No bearing is provided on the outer surface of the leading end portion 22.

### (First Support 3)

In the example illustrated in FIG. 14, the first support 3 includes a rotation body 31, a rotation body support member 33, and a second bearing group 35.

The rotation body 31 is rotatable about a second axis AX2. The second axis AX2, which is a rotation axis of the rotation body 31, is substantially coaxial with the first axis AX, which is a rotation axis of the rotating shaft 2. In the rotation body 31, the through hole 3h is formed, and the guide bushing adapter 92 is attachable to the through hole 3h.

The rotation body support member 33 supports, via the second bearing group 35, the rotation body 31 rotatably about the second axis AX2. The rotation body support member 33 is made up of a plurality of members. The second bearing group 35 is provided between the rotation body support member 33 and the rotation body 31.

### (Rotary Drive 38)

In the example illustrated in FIG. 14, the workpiece support 1A for a machine tool includes a rotary drive 38. The rotary drive 38 rotates the rotation body 31 about the second axis AX2 relative to the rotation body support member 33. In the example illustrated in FIG. 14, the rotary drive 38 includes a second motor 381 (for example, a servo motor) and a transmission belt 383. The transmission belt 383 transmits rotation of an output shaft of the second motor 381 to the rotation body 31.

The rotary drive 38 will not be limited to the drive made up of the second motor 381 and the transmission belt 383. As the rotary drive 38, it is possible to employ any other drive capable of rotating the rotation body 31 about the second axis AX2. The rotary drive 38 may be an electromagnetic drive including a stator and a rotor. The rotary drive 38 may alternatively be a device that drives the rotation body 31 using the motive power of the spindle motor 7. In other words, the rotary drive 38 may include the spindle motor 7 and a transfer mechanism (for example, a transmission belt and a gear) that connects the spindle motor 7 and the rotation body 31 in such a manner that motive power can be transmitted between the spindle motor 7 and the rotation body 31.

In the example illustrated in FIG. 14, the angular velocity at which the rotation body 31 is rotated by the rotary drive 38 is preferably substantially equal to the angular velocity at which the rotating shaft 2 is rotated by the spindle motor 7. In other words, the rotation body 31 and the rotating shaft 2 are preferably driven synchronously so that the angular velocities are substantially equal to each other. In a case where the angular velocity of the rotation body 31 and the angular velocity of the rotating shaft 2 are equal to each other, wear of the outer surface of the attachment 51 and wear of the inner surface of the through hole 3h are prevented or restricted.

### (Air Supplier 8)

In the example illustrated in FIG. 15, the workpiece support 1A for a machine tool includes an air supplier 8. The air supplier 8 supplies air to the first support 3. In the example illustrated in FIG. 16, an ejection opening 325 is formed on the inner surface 32n (more specifically, the inner circumferential surface) of the through hole 3h of the first support 3. Through the ejection opening 325, the air supplied from the air supplier 8 is injected. The ejection opening 325 may be made up of a groove (for example, a ring-shaped groove formed on the inner surface 32n of the through hole 3h) or may be made up of one ejection opening or a plurality of ejection openings. In the example illustrated in FIG. 16, air is injected through the ejection opening 325 in a direction toward the first axis AX (more specifically, in a direction toward the outer surface of the leading end portion 22 of the rotating shaft 2). Air may be injected through the ejection opening 325 such that the air has a momentum component in the direction toward the first axis AX and a momentum component in the first direction *DR1.*

In the example illustrated in FIG. 16, the air injected through the ejection opening 325 passes through a gap G4 between the inner surface 32n of the through hole 3h and the outer surface of the leading end portion 22 of the rotating shaft 2 and is discharged in the first direction *DR1.* The air discharged in the first direction *DR1* through the gap G4 forms a first air curtain J1. The first air curtain J1 prevents or restricts entry of foreign matter such as chips and coolant in the gap G4 between the inner surface 32n of the through hole 3h and the outer surface of the leading end portion 22 of the rotating shaft 2. Restricting entry of foreign matter also restricts unintended vibration of the rotating shaft 2, restricting degradation of the machining accuracy. Restricting entry of foreign matter further prevents or restricts damage or breakage of the rotating shaft 2, which would otherwise be caused by entry of foreign matter.

In the example illustrated in FIG. 16, the first support 3 includes the rotation body 31, the rotation body support member 33, and an air conduit 324.

The rotation body 31 includes the through hole 3h, which is capable of supporting the guide bushing adapter 92. The rotation body support member 33 supports the rotation body 31 rotatably about the second axis AX2. The air conduit 324 fluidally connects the air supplier 8 (see FIG. 15) and the ejection opening 325 to each other.

In the example illustrated in FIG. 16, the air conduit 324 is provided to cross a gap G5 between the rotation body 31 and the rotation body support member 33. In this case, part of the air flowing the air conduit 324 passes through a gap G5 between the rotation body 31 and the rotation body support member 33 and is discharged in the first direction *DR1.* The air discharged in the first direction *DR1* through the gap G5 forms a second air curtain J2. The second air curtain J2 prevents or restricts entry of foreign matter such as chips and coolant in the gap G5 between the rotation body 31 and the rotation body support member 33. Restricting entry of foreign matter in the gap G5 also prevents or restricts damage or breakage of the second bearing group 35.

In the example illustrated in FIG. 16, with the leading end portion 22 of the rotating shaft 2 provided at the interior of the through hole 3h, the first air curtain J1 is formed by the air discharged through the gap G4 between the inner surface 32n of the through hole 3h and the outer surface of the leading end portion 22 of the rotating shaft 2, and the second air curtain J2 is formed by the air discharged through the gap G5 between the rotation body 31 and the rotation body support member 33. The second air curtain J2 is formed to surround the first air curtain J1. In the example illustrated in FIG. 16, the air forming the first air curtain J1 passes through a common part 324a of the air conduit 324, and the air forming the second air curtain J2 passes through the common part 324a of the air conduit 324. In this case, the configuration of the air conduit 324 is simplified. It is to be noted, however, that the air conduit through which the air forming the first air curtain J1 passes may be completely separate from the air conduit through which the air forming the second air curtain J2 passes. It is also to be noted that the second air curtain J2 itself may not necessarily be formed.

In the example illustrated in FIG. 17, the guide bushing adapter 92 is attached to the through hole 3h. In the example illustrated in FIG. 18, with the guide bushing adapter 92 attached to the through hole 3h, the ejection opening 325 is sealed by the guide bushing adapter 92. In the example illustrated in FIG. 17, the leading end portion 22 of the rotating shaft 2 is provided further in the second direction *DR2* than the guide bushing 91. With this configuration, there is a lower possibility of foreign matter such as chips and coolant attaching to the leading end portion 22 of the rotating shaft 2. Therefore, in the example illustrated in FIG. 17, it is not necessary to form the first air curtain J1.

In the example illustrated in FIG. 18, the air conduit 324 is provided to cross the gap G5 between the rotation body 31 and the rotation body support member 33. In this case, at least part of the air flowing through the air conduit 324 passes through the gap G5 between the rotation body 31 and the rotation body support member 33 and is discharged in the first direction *DR1.* The second air curtain J2 is formed by the air discharged through the gap G5 between the rotation body 31 and the rotation body support member 33.

### (Second Embodiment)

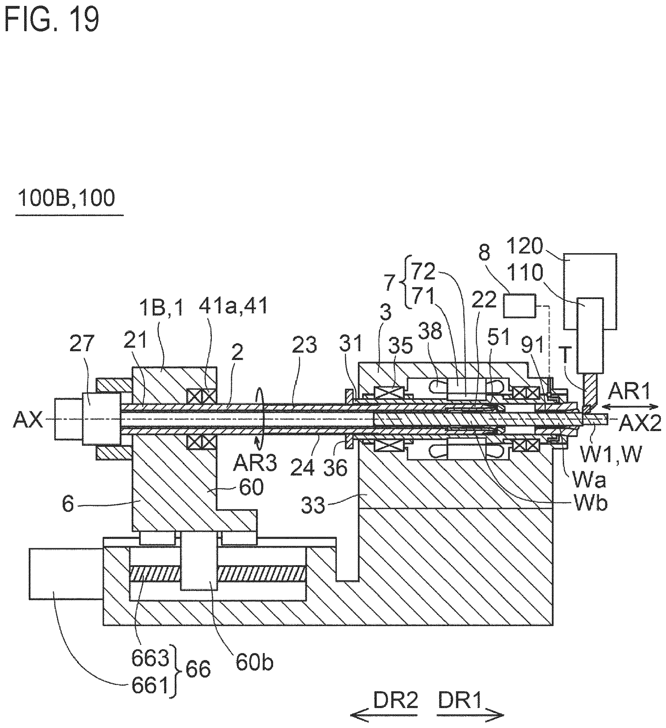

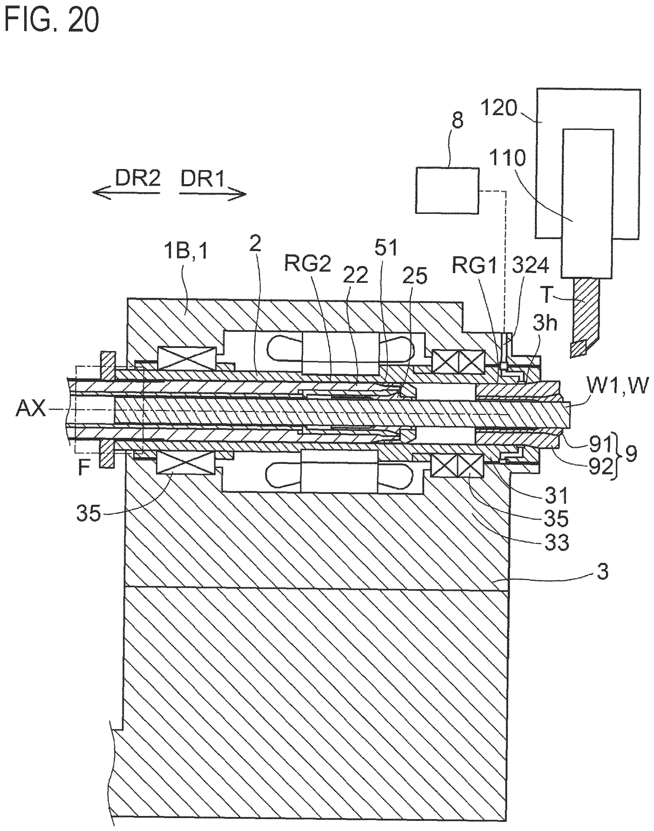

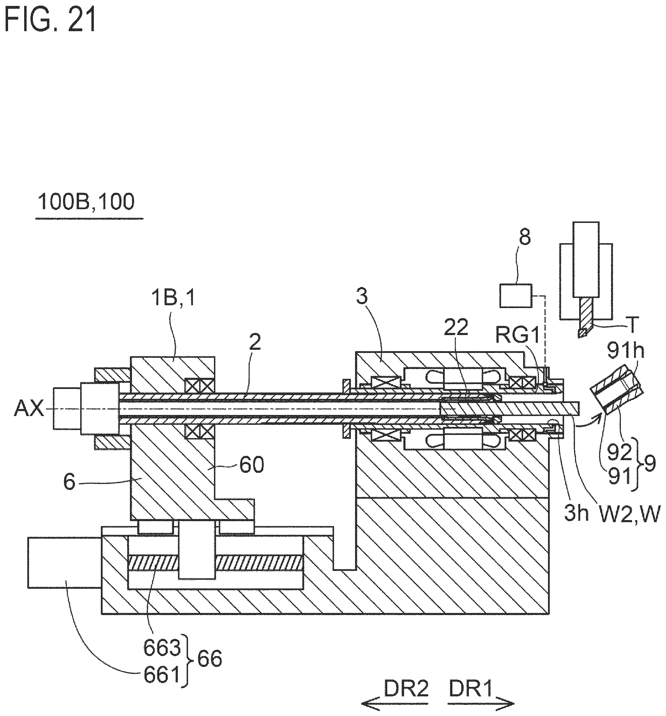

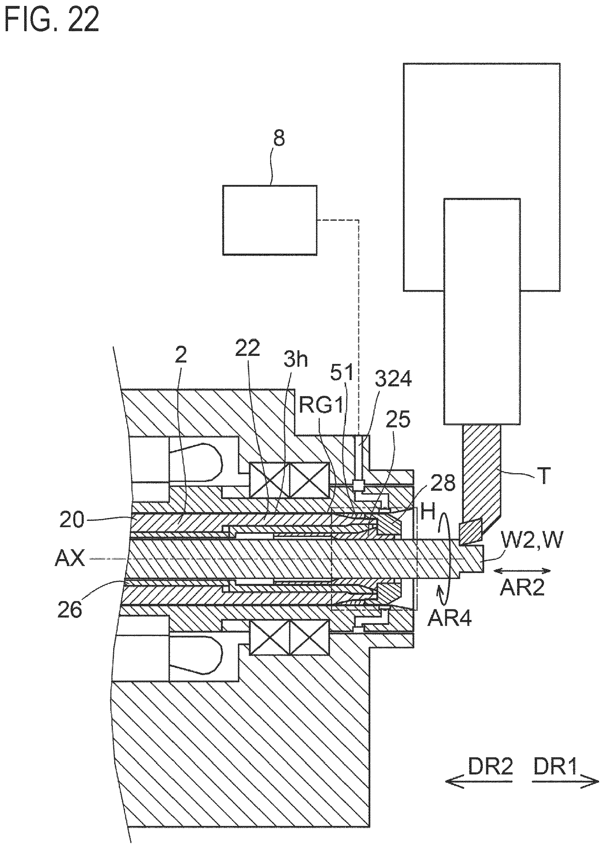

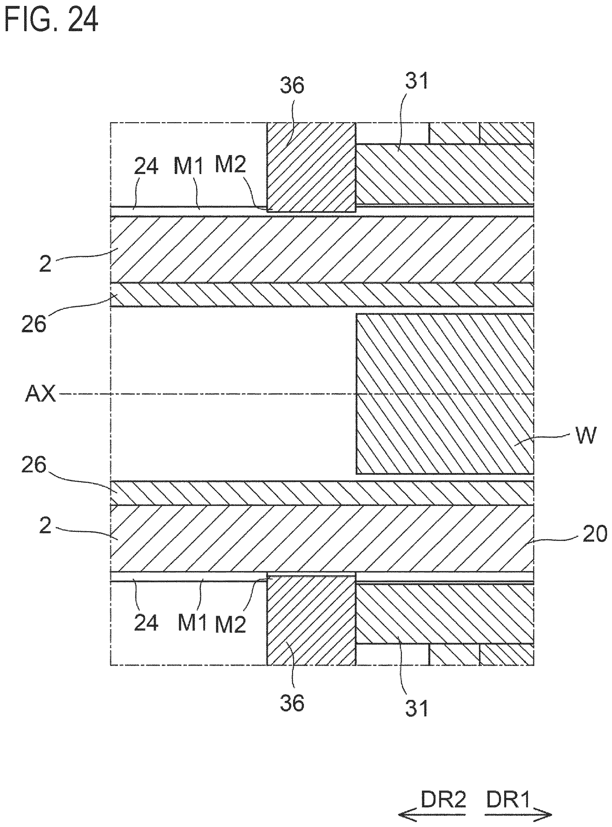

By referring to FIGs. 19 to 24, description will be made with regard to a workpiece support 1B according to the second embodiment for a machine tool and with regard to a machine tool 100B according to the second embodiment. FIG. 19 is a cross-sectional view of the machine tool 100B according to the second embodiment, schematically illustrating the machine tool 100B. FIG. 20 is a cross-sectional view of a part of the machine tool 100B according to the second embodiment, schematically illustrating the part. FIG. 21 is a cross-sectional view of the machine tool 100B according to the second embodiment, schematically illustrating the machine tool 100B. FIG. 22 is a cross-sectional view of a part of the machine tool 100B according to the second embodiment, schematically illustrating the part. FIG. 23 is an enlarged view of a region H surrounded by a quadrangular single-dashed line in FIG. 22. FIG. 24 is an enlarged view of a region F surrounded by a quadrangular single-dashed line in FIG. 20.

The workpiece support 1B according to the second embodiment for a machine tool and the machine tool 100B according to the second embodiment are respectively different from the workpiece support 1A according to the first embodiment for a machine tool and the machine tool 100A according to the first embodiment in that the spindle motor 7, which rotates the rotating shaft 2 about the first axis AX, is provided at the first support 3 in the second embodiment.

The following description of the second embodiment will mainly focus on those respects in which the second embodiment is different from the first embodiment. Those respects already described in the first embodiment will not be described in the second embodiment to avoid a repetition of description. Thus, it will be readily appreciated that those respects that are not explicitly described in the second embodiment but are described in the first embodiment apply in the second embodiment.

As exemplified in FIG. 19, the workpiece support 1B according to the second embodiment for a machine tool includes the rotating shaft 2, the first support 3, the second support 6, and the attachment 51.

The rotating shaft 2 supports the workpiece W and is rotatable about the first axis AX. The rotating shaft 2 has the rear end portion 21 and the leading end portion 22. In the example illustrated in FIG. 20, the collet 25 is provided at the leading end portion 22 of the rotating shaft 2. In this case, the rotating shaft 2 supports the workpiece via the collet 25.

The first support 3 has the through hole 3h, which is capable of supporting the guide bushing unit 9. More specifically, the through hole 3h is capable of supporting the guide bushing adapter 92, which holds the guide bushing 91. To the through hole 3h, the guide bushing adapter 92 is attachable. FIG. 20 illustrates a state in which the guide bushing adapter 92 is attached to the through hole 3h of the first support 3. FIG. 21 illustrates a state in which the guide bushing adapter 92 is removed from the through hole 3h of the first support 3.

In the example illustrated in FIG. 21, the guide bushing unit 9 is made up of a plurality of members. More specifically, the guide bushing unit 9 includes the guide bushing 91 and the guide bushing adapter 92, which holds the guide bushing 91. The guide bushing 91 has the through hole 91h, through which the workpiece is inserted. The guide bushing 91 is held by the guide bushing adapter 92. The guide bushing adapter 92 is mounted on the first support 3.

In the example illustrated in FIG. 19, the first portion Wa of the workpiece W (more specifically, the leading end portion of the workpiece W) is supported by the guide bushing 91 movably in the first direction *DR1* relative to the guide bushing 91. Also, the second portion Wb of the workpiece W (more specifically, a longitudinal center portion of the workpiece W or the base end portion of the workpiece W) is held by the rotating shaft 2.

As exemplified in FIG. 19, the second support 6 supports the rotating shaft 2 (more specifically, a part of the rotating shaft 2). The second support 6 also moves the rotating shaft 2 relative to the first support 3 in a direction parallel to the first axis AX. Upon movement of the rotating shaft 2 in the direction parallel to the first axis AX relative to the first support 3, the workpiece W held by the rotating shaft 2 moves in the direction parallel to the first axis AX (see the arrow AR1). By moving the rotating shaft 2 in the direction parallel to the first axis AX, the second support 6 is capable of changing the machining position at which the workpiece W is machined by the tool T.

In the example illustrated in FIG. 21, the through hole 3h of the first support 3 is capable of receiving the leading end portion 22 of the rotating shaft 2. Also, the state of the interior of the through hole 3h is switchable between a first state (see FIG. 20) and a second state (see FIG. 22). The first state is a state in which the guide bushing 91 is provided at a first region RG1 of the interior of the through hole 3h. The second state is a state in which the leading end portion 22 of the rotating shaft 2 is provided at the first region RG1. Switching the state of the interior of the through hole 3h from the first state to the second state is performed by removing the guide bushing adapter 92 from the through hole 3h and then moving the rotating shaft 2 in the first direction *DR1.*

In the example illustrated in FIG. 21, by moving the rotating shaft 2 in the first direction *DR1,* the second support 6 is capable of changing the position of the leading end portion 22 of the rotating shaft 2 from a position further at the second direction *DR2* side than the first region RG1 to a position in the first region RG1 that has been occupied by the guide bushing unit 9.

As exemplified in FIG. 22, when the position of the leading end portion 22 of the rotating shaft 2 is in the first region RG1, a short workpiece (in other words, the second workpiece W2) held by the leading end portion 22 of the rotating shaft 2 can be machined by the tool T.

The workpiece support 1B according to the second embodiment for a machine tool includes the attachment 51, which is provided in contact with the outer surface 22t of the leading end portion 22 of the rotating shaft 2. In the example illustrated in FIG. 23, the attachment 51 is attached to the leading end portion 22 of the rotating shaft 2.

At least a part of the outer surface 51t of the attachment 51 is displaceable in the direction away from the first axis AX. The configuration in which at least a part of the outer surface 51t of the attachment 51 is displaceable in a direction away from the first axis AX reduces the gap G2 between the outer surface 51t of the attachment 51 and the inner surface 32n of the through hole 3h. Thus, the attachment 51 reduces the amount of displaceability of the leading end portion 22 of the rotating shaft 2 in a direction perpendicular to the first axis AX.

More specifically, at least a part of the attachment 51 is displaceable in a direction away from the first axis AX so that a first distance *L1* is larger than a second distance *L2.* The first distance *L1* is a distance between the first axis AX and an outermost portion 511t of the attachment 51 (in the example illustrated in FIG. 23, the outermost portion 511t of the attachment 51 is the outer surface 51t of the attachment 51). The second distance *L2* is a distance between the first axis AX and the outermost surface 222t of the leading end portion 22 of the rotating shaft 2.

In the example illustrated in FIG. 23, the configuration in which the first distance *L1* is larger than the second distance *L2* enables the attachment 51 to prevent direct contact between the outermost surface 222t of the leading end portion 22 of the rotating shaft 2 and the inner surface 32n of the through hole 3h. In other words, when the rotating shaft 2 bends, the outermost portion 511t of the attachment 51 contacts the inner surface 32n of the through hole 3h before the outermost surface 222t of the leading end portion 22 of the rotating shaft 2 contacts the inner surface 32n of the through hole 3h. Thus, the amount of displaceability of the leading end portion 22 in the direction perpendicular to the first axis AX is reduced.

The workpiece support 1B according to the second embodiment for a machine tool provides effects similar to the effects provided by the workpiece support 1A according to the first embodiment for a machine tool.

In the example illustrated in FIG. 20, the guide bushing 91 is provided at the first region RG1 of the interior of the through hole 3h, and the leading end portion 22 of the rotating shaft 2 is provided at a second region RG2 of the interior of the through hole 3h. The second region RG2 is a region further at the second direction *DR2* side than the first region RG1. In the example illustrated in FIG. 20, the first workpiece W1 can be supported by the guide bushing 91, which is provided at the first region RG1 of the interior of the through hole 3h of the first support 3, and by the leading end portion 22 of the rotating shaft 2, which is provided at the second region RG2 of the interior of the through hole 3h. The configuration in which both the leading end portion 22 of the rotating shaft 2 and the guide bushing 91 are provided at the single through hole 3h makes the first workpiece W1 less likely to bend. It is to be noted, however, that the second embodiment does not exclude an embodiment in which the leading end portion 22 of the rotating shaft 2 is provided at the outside of the through hole 3h (more specifically, an embodiment in which the leading end portion 22 is provided further at the second direction *DR2* side than the through hole 3h).

As exemplified in FIG. 19, the machine tool 100B according to the second embodiment includes, in addition to the workpiece support 1B for a machine tool: the tool holder 110, which holds the tool T; and the second drive 120, which moves the tool holder 110. The second drive 120 is capable of moving the tool holder 110 in a direction toward the first axis AX (or in a direction away from the first axis AX).

### (Optional Configurations)

Next, by referring to FIGs. 19 to 24, description will be made with regard to optional configurations employable in the workpiece support 1B according to the second embodiment for a machine tool and in the machine tool 100B according to the second embodiment.

### (Second Support 6)

In the example illustrated in FIG. 19, the second support 6 includes the shaft support member 60 and the first drive 66. The workpiece support 1B for a machine tool includes the first bearing group 41.

The shaft support member 60 supports, via the first bearing group 41, the rotating shaft 2 rotatably about the first axis AX. The shaft support member 60 is made up of a plurality of members.

The first drive 66 moves the shaft support member 60 in a direction parallel to the first axis AX. By the first drive 66 moving the shaft support member 60 in a direction parallel to the first axis AX, the rotating shaft 2 supported by the shaft support member 60 moves in the direction parallel to the first axis AX.

In the example illustrated in FIG. 19, the first drive 66 is capable of moving the rotating shaft 2 and the shaft support member 60 in a direction parallel to the first axis AX relative to the first support 3 and the spindle motor 7.

In the example illustrated in FIG. 19, the first drive 66 includes the first motor 661 (for example, a servo motor) and the thread axis 663, which is driven by the first motor 661. The shaft support member 60 is screwed with the thread axis 663 via a rolling element such as a ball and a roller. It is to be noted that the first drive 66 will not be limited to the drive made up of the first motor 661 and the thread axis 663. As the first drive 66, it is possible to employ any other drive capable of moving the rotating shaft 2 in a direction parallel to the first axis AX.

The first bearing group 41 is provided between the shaft support member 60 and the rotating shaft 2. In the example illustrated in FIG. 19, the first bearing group 41 includes the first bearing 41a, which is provided between the shaft support member 60 and the rear end portion 21 of the rotating shaft 2. In the example illustrated in FIG. 19, the center portion 23 and the leading end portion 22 of the rotating shaft 2 protrude in the first direction *DR1* beyond the shaft support member 60.

### (First Support 3)

In the example illustrated in FIG. 19, the first support 3 includes the rotation body 31, the rotation body support member 33, and the second bearing group 35. Also in the example illustrated in FIG. 19, the first support 3 includes the spindle motor 7 and an engagement member 36.

The rotation body 31 is rotatable about the second axis AX2, which is substantially coaxial with the first axis AX. In other words, the rotation axis of the rotation body 31 is substantially coaxial with the rotation axis of the rotating shaft 2. In the rotation body 31, the through hole 3h is formed, and the guide bushing adapter 92 is attachable to the through hole 3h.

The rotation body support member 33 supports, via the second bearing group 35, the rotation body 31 rotatably about the second axis AX2. The rotation body support member 33 is made up of a plurality of members. The second bearing group 35 is provided between the rotation body support member 33 and the rotation body 31.

The spindle motor 7 rotates the rotating shaft 2 about the first axis AX relative to the shaft support member 60. In the example illustrated in FIG. 19, the spindle motor 7 includes a stator 71 and a rotor 72. The stator 71 is provided at the rotation body support member 33, and the rotor 72 is provided at the rotation body 31. In this case, the rotation body 31 is electromagnetically driven into rotation by the spindle motor 7. Alternatively, the spindle motor 7 may drive the rotation body 31 into rotation via a motive power transmission member such as a transmission belt.

In the example illustrated in FIG. 24, the engagement member 36 is provided at the rotation body 31, and the engagement member 36 transmits a rotation of the rotation body 31 to the rotating shaft 2. In the example illustrated in FIG. 24, the engagement between the engagement member 36 and an engagement portion 24 of the rotating shaft 2 permits the rotating shaft 2 to move in a direction parallel to the first axis AX relative to the rotation body 31, and prohibits rotation of the rotating shaft 2 about the first axis AX relative to the rotation body 31. As exemplified in FIG. 24, one of the engagement portion 24 and the engagement member 36 may include at least one groove M1, which extends in a direction parallel to the first axis AX, or may include at least one elongate hole extending in the direction parallel to the first axis AX. Alternatively, the other of the engagement portion 24 and the engagement member 36 may include at least one protrusion M2, which is engaged with the at least one groove M1 or the at least one elongate hole.

### (Rotary Drive 38)

In the example illustrated in FIG. 19, the workpiece support 1A for a machine tool includes the rotary drive 38. The rotary drive 38 rotates the rotation body 31 about the second axis AX2, which is substantially coaxial with the first axis AX, relative to the rotation body support member 33. In the example illustrated in FIG. 19, the rotary drive 38, which rotates the rotation body 31 about the second axis AX2 relative to the rotation body support member 33, is made up of the spindle motor 7. In other words, the spindle motor 7 serves as the rotary drive 38, which rotates the rotation body 31 about the second axis AX2.

The configuration in which the spindle motor 7 and the rotary drive 38 are commonized ensures compactness for the mechanism to drive the rotating shaft 2 and the rotation body 31 into rotation. Also, in a case of commonizing the spindle motor 7, which drives the rotating shaft 2 into rotation, and the rotary drive 38, which drives the rotation body 31 into rotation, the rotation of the rotating shaft 2 and the rotation of the rotation body 31 can be easily synchronized.

### (Attachment 51)

In the example illustrated in FIG. 23, the attachment 51 is provided between the outer surface 22t of the rotating shaft 2 and the inner surface 32n of the through hole 3h. The attachment 51 has the inner surface 51n, which is in contact with the outer surface 22t of the rotating shaft 2, and the outer surface 51t, which faces the inner surface 32n of the through hole 3h.

In the example illustrated in FIG. 23, at least one of the attachment 51 and the rotating shaft 2 has the inclined surface AS, which converts the movement of the attachment 51 in the direction parallel to the first axis AX relative to the rotating shaft 2 into a displacement of at least a part of the attachment 51 (for example, the outer surface 51t of the attachment 51) in a direction away from the first axis AX. More specifically, the inner surface 51n of the attachment 51 has the first inclined surface AS1, which increases in distance from the first axis AX in the second direction *DR2.* The outer surface 22t of the rotating shaft 2 has the second inclined surface AS2, which increases in distance from the first axis AX in the second direction *DR2.* In this case, by moving the attachment 51 in the second direction *DR2* relative to the rotating shaft 2, the outer surface 51t of the attachment 51 is displaced in a direction away from the first axis AX.

In the example illustrated in FIG. 23, at least a part of the attachment 51 is enlargeable in diameter in a direction away from the first axis AX. More specifically, at least a part of the attachment 51, which is provided at the leading end portion 22 of the rotating shaft 2, is enlargeable in diameter in a direction away from the first axis AX so that the first distance *L1* between the first axis AX and the outermost portion 511t of the attachment 51 is larger than the second distance *L2* between the first axis AX and the outermost surface 222t of the leading end portion 22 of the rotating shaft 2.

The attachment 51 includes, for example, a ring member. The attachment 51 may be a C-shaped ring member (see, if necessary, FIGs. 8 and 9), a circular ring member (see, if necessary, FIGs. 10 and 11), or a ring member made up of a plurality of ring divisions.

### (Pressing Member 55)

In the example illustrated in FIG. 23, the workpiece support 1B for a machine tool includes the pressing member 55, which presses the attachment 51 in the second direction *DR2.* By pressing the attachment 51 in the second direction *DR2,* the pressing member 55 moves the attachment 51 in a direction parallel to the first axis AX (more specifically, the second direction *DR2*) relative to the rotating shaft 2. Also, by pressing the attachment 51 in the second direction *DR2* using the pressing member 55 to move the attachment 51 in the second direction *DR2,* the outer surface 51t of the attachment 51 is displaced in a direction toward the inner surface 32n of the through hole 3h. Thus, the gap G2 between the outer surface 51t of the attachment 51 and the inner surface 32n of the through hole 3h reduces.

In the example illustrated in FIG. 23, the pressing member 55 includes a first thread portion (more specifically, the female thread portion 28p). The first thread portion converts the rotational force acting on the pressing member 55 into a pressing force to press the attachment 51. In other words, the pressing member 55 includes the threaded member 55a, which converts the rotational force acting on the pressing member 55 into a pressing force to press the attachment 51.

In the example illustrated in FIG. 23, the first thread portion (more specifically, the female thread portion 28p) is screwed with a second thread portion (more specifically, the male thread portion 20p) of the rotating shaft body 20. In the example illustrated in FIG. 23, the threaded member 55a is the nut 28 (more specifically, a cap nut), which is screwed with the leading end portion of the rotating shaft body 20. Alternatively, the threaded member 55a may be a bolt, as exemplified in FIG. 7.

In the example illustrated in FIG. 23, by rotating the female thread portion 28p of the pressing member 55 relative to the male thread portion 20p of the rotating shaft body 20, the pressing member 55 is caused to press the attachment 51 (more specifically, the ring member) in the second direction *DR2*. As a result, the attachment 51 is moved in the second direction *DR2*, and the outer surface 51t of the attachment 51 is displaced in a direction toward the inner surface 32n of the through hole 3h.

### (Rotating Shaft 2)

In the example illustrated in FIG. 23, the rotating shaft 2 includes the rotating shaft body 20 and the collet 25, which holds the workpiece W. The rotating shaft 2 may include the collet operation shaft 26, the operation shaft drive 27 (see FIG. 19), and the nut 28 (more specifically, a cap nut).

The rotating shaft body 20, the collet 25, the collet operation shaft 26, the operation shaft drive 27, and the nut 28 are as described in the first embodiment. Description of these configurations will be omitted where otherwise a repetition occurs.

### (Third Embodiment)

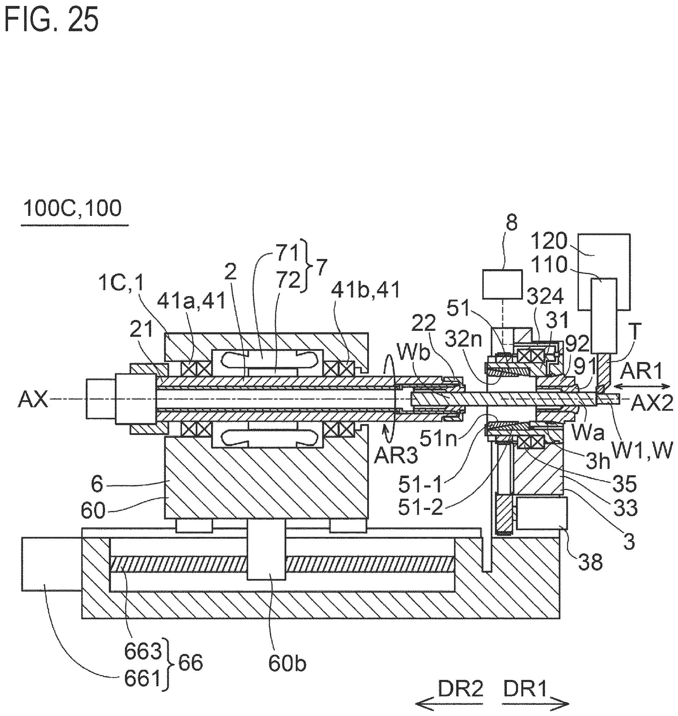

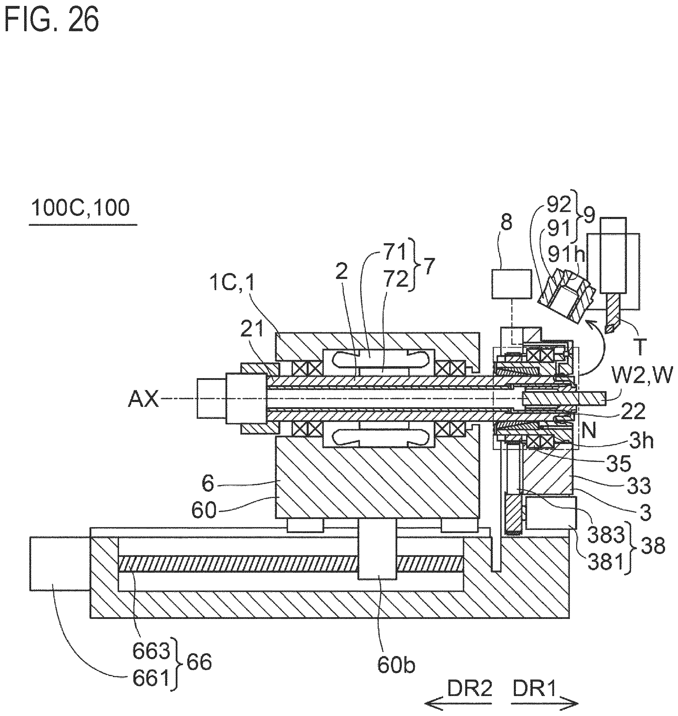

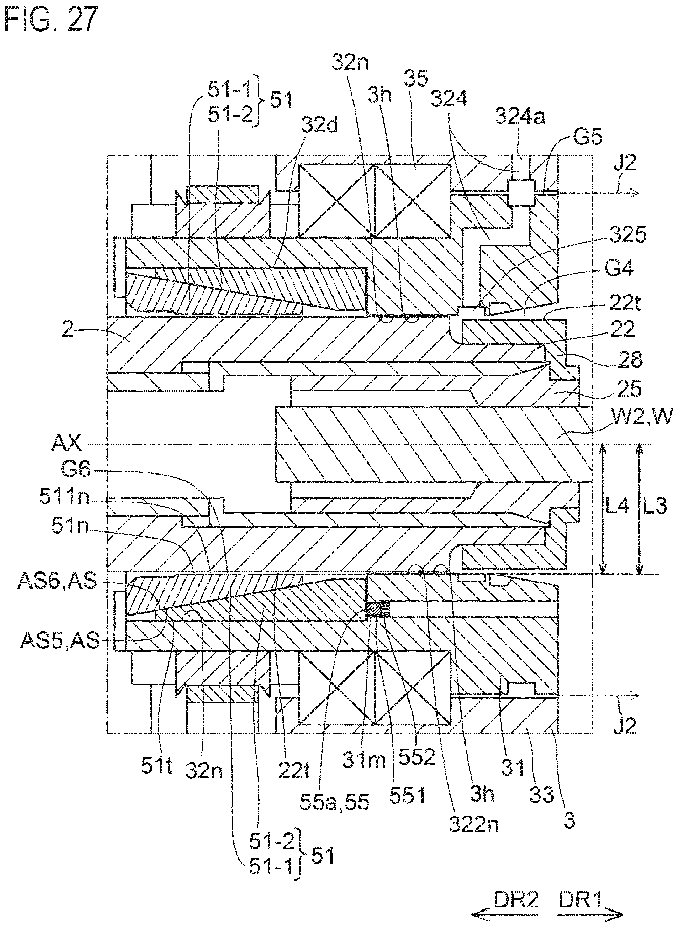

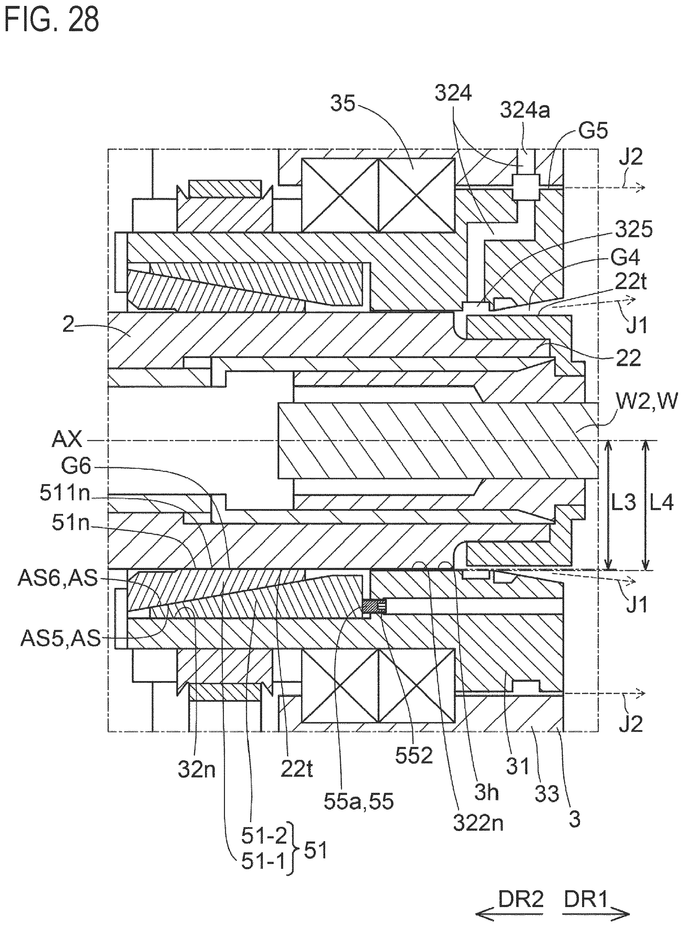

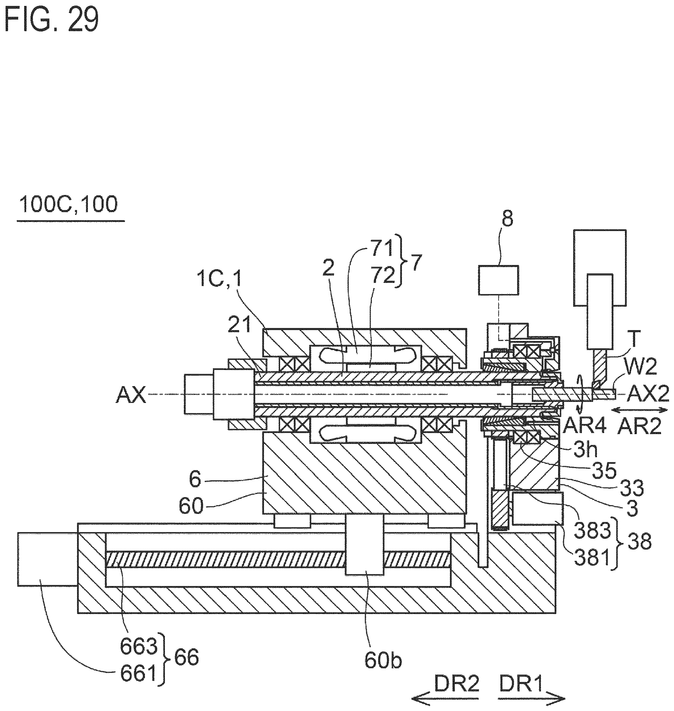

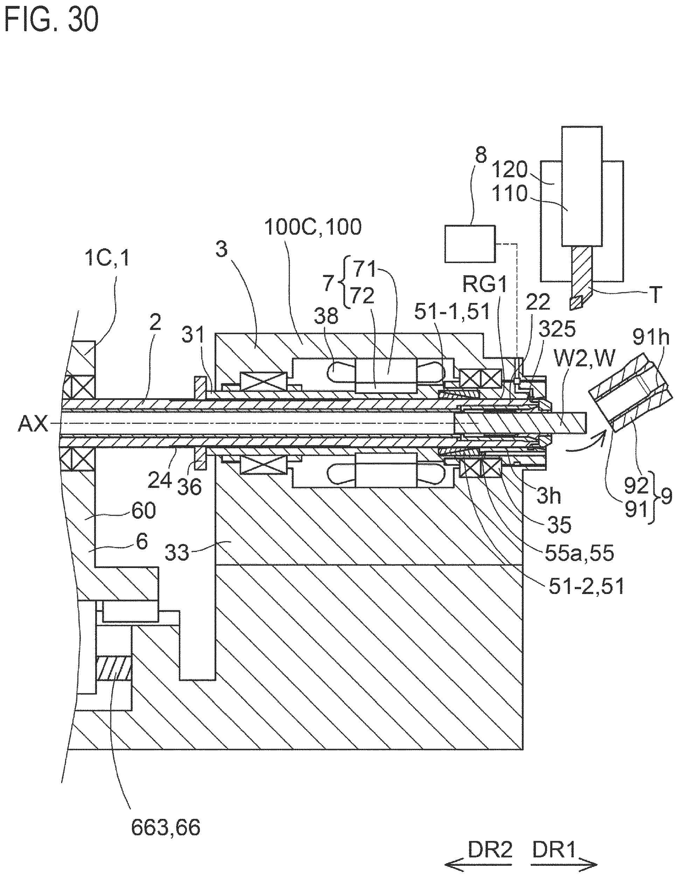

By referring to FIGs. 25 to 30, description will be made with regard to a workpiece support 1C according to the third embodiment for a machine tool and with regard to a machine tool 100C to the third embodiment. FIGs. 25 and 26 are cross-sectional views of the machine tool 100C according to the third embodiment, schematically illustrating the machine tool 100C. FIG. 27 is an enlarged view of a region N surrounded by a quadrangular single-dashed line in FIG. 26. FIG. 28 is an enlarged view of a region N surrounded by a quadrangular single-dashed line in FIG. 26. It is to be noted that FIG. 28 illustrates a state after the attachment 51 in FIG. 27 has been displaced in a direction toward the first axis AX. FIG. 29 is a cross-sectional view of the machine tool 100C according to the third embodiment, schematically illustrating the machine tool 100C. FIG. 30 is a cross-sectional view of a part of the machine tool 100C according to a first modification of the first embodiment, schematically illustrating the part.

The third embodiment is different from the first and second embodiments in that the attachment 51 is provided in contact with the inner surface 32n of the through hole 3h of the first support 3.

The following description of the third embodiment will mainly focus on those respects in which the third embodiment is different from the first and second embodiments. Those respects already described in the first or second embodiment will not be described in the third embodiment to avoid a repetition of description. Thus, it will be readily appreciated that those respects that are not explicitly described in the third embodiment but are described in the first or second embodiment apply in the third embodiment.

As exemplified in FIG. 25, the workpiece support 1C according to the third embodiment for a machine tool includes the rotating shaft 2, the first support 3, the second support 6, and the attachment 51.

The rotating shaft 2 supports the workpiece W and is rotatable about the first axis AX. The rotating shaft 2 includes the rear end portion 21 and the leading end portion 22.

In the example illustrated in FIG. 25, the first portion Wa of the workpiece W is supported by the guide bushing 91 movably in the first direction *DR1* relative to the guide bushing 91. Also, the second portion Wb of the workpiece W is held by the rotating shaft 2. Thus, in the example illustrated in FIG. 25, the elongate workpiece (in other words, the first workpiece W1) can be stably supported by the leading end portion 22 of the rotating shaft 2 and the guide bushing 91.

The first support 3 has the through hole 3h, which is capable of supporting the guide bushing adapter 92, which holds the guide bushing 91. FIG. 25 illustrates a state in which the guide bushing adapter 92 is attached to the through hole 3h of the first support 3. FIG. 26 illustrates a state in which the guide bushing adapter 92 is removed from the through hole 3h of the first support 3.

As exemplified in FIG. 26, with the guide bushing adapter 92 removed from the through hole 3h, the through hole 3h is capable of receiving the leading end portion 22 of the rotating shaft 2. This ensures that in the example illustrated in FIG. 26, the short workpiece (in other words, the second workpiece W2) can be supported by the leading end portion 22 of the rotating shaft 2 inserted in the through hole 3h.

In the examples illustrated in FIGs. 25 and 26, with the attachment 51 attached to the through hole 3h of the first support 3, the leading end portion 22 of the rotating shaft 2 is movable from the outside of the through hole 3h (see FIG. 25) to the interior of the through hole 3h (see FIG. 26). In this case, after the leading end portion 22 has been moved to the interior of the through hole 3h, it is not necessary to attach the attachment 51 to the through hole 3h. This reduces the amount of work necessary for switching from machining of an elongate workpiece to machining of a short workpiece, and quickens the switch from machining of an elongate workpiece to machining of a short workpiece.

The second support 6 supports the rotating shaft 2. The second support 6 also moves the rotating shaft 2 relative to the first support 3 in a direction parallel to the first axis AX.

In the example illustrated in FIG. 26, the second support 6 includes the shaft support member 60, which supports the rotating shaft 2 rotatably about the first axis AX, and the first drive 66, which moves the shaft support member 60 in a direction parallel to the first axis AX. The first drive 66 moves the spindle motor 7 that rotates the rotating shaft 2, the shaft support member 60, and the rotating shaft 2, in a direction parallel to the first axis AX relative to the first support 3. Alternatively, as exemplified in FIG. 30, the first drive 66 may move the rotating shaft 2 and the shaft support member 60 in a direction parallel to the first axis AX relative to the spindle motor 7 that rotates the first support 3 and the rotating shaft 2.

In the example illustrated in FIG. 25, the attachment 51 is provided in contact with the inner surface 32n of the through hole 3h of the first support 3. More specifically, the attachment 51 is attached to the inner surface 32n of the through hole 3h. The attachment 51 may be made up of a single member or a plurality of members (for example, a first member 51-1 and a second member 51-2). In this specification, the attachment 51 provided in contact with the inner surface 32n of the through hole 3h of the first support 3 may be referred to as "second attachment".

At least a part of the inner surface 51n of the attachment 51 is displaceable in a direction toward the first axis AX. The configuration in which at least a part of the inner surface 51n of the attachment 51 is displaceable in a direction toward the first axis AX reduces a gap G6 (see FIG. 28) between the inner surface 51n of the attachment 51 and the outer surface 22t of the leading end portion 22 of the rotating shaft 2. Thus, the attachment 51 reduces the amount of displaceability of the leading end portion 22 of the rotating shaft 2 in a direction perpendicular to the first axis AX.

More specifically, at least a part of the attachment 51 is displaceable in a direction toward the first axis AX so that a third distance *L3* between the first axis AX and an innermost portion 511n of the attachment 51 provided in contact with the inner surface 32n of the through hole 3h (in the example illustrated in FIG. 28, the innermost portion 511n of the attachment 51 is the inner surface 51n of the attachment 51) is smaller than the fourth distance L4 between the first axis AX and an innermost surface 322n of the through hole 3h. It is to be noted that the innermost portion 511n of the attachment 51 is intended to mean a portion, among the portions of the attachment 51, that is shortest in distance from the first axis AX. It is also to be noted that the innermost surface 322n of the through hole 3h is intended to mean a portion, among the portions of the inner surface 32n of the through hole 3h, that is shortest in distance from the first axis AX.

In the example illustrated in FIG. 28, the configuration in which the third distance *L3* is smaller than the fourth distance *L4* ensures that the attachment 51 prevents direct contact between the outer surface 22t of the leading end portion 22 of the rotating shaft 2 and the innermost surface 322n of the through hole 3h. In other words, when the rotating shaft 2 bends, before the outer surface 22t of the leading end portion 22 of the rotating shaft 2 contacts the innermost surface 322n of the through hole 3h, the innermost portion 511n of the attachment 51 contacts the outer surface 22t of the leading end portion 22 of the rotating shaft 2. Thus, the amount of displaceability of the leading end portion 22 in the direction perpendicular to the first axis AX is reduced.

The workpiece support 1C according to the third embodiment for a machine tool provides effects similar to the effects provided by the workpiece support 1A according to the first embodiment for a machine tool or the workpiece support 1B according to the second embodiment for a machine tool.

As exemplified in FIG. 25, the machine tool 100C according to the third embodiment includes, in addition to the workpiece support 1C for a machine tool: the tool holder 110, which holds the tool T; and the second drive 120, which moves the tool holder 110. The second drive 120 is capable of moving the tool holder 110 in a direction toward the first axis AX (or in a direction away from the first axis AX).

### (Optional Configurations)

Next, by referring to FIGs. 25 to 30, description will be made with regard to optional configurations employable in the workpiece support 1C according to the third embodiment for a machine tool and in the machine tool 100C to the third embodiment. In the third embodiment, configurations other than the attachment 51 and the pressing member 55 are similar to the configurations other than the attachment 51 and the pressing member 55 according to the first or second embodiment. In view of this similarity, the following description will focus on the attachment 51 and the pressing member 55, and description of other configurations will be omitted where otherwise a repetition occurs.

### (Attachment 51)

In the example illustrated in FIG. 27, the attachment 51 is provided between the outer surface 22t of the leading end portion 22 of the rotating shaft 2 and the inner surface 32n of the through hole 3h. The attachment 51 has the outer surface 5 1t, which is in contact the inner surface 32n of the through hole 3h; and the inner surface 51n, which faces the outer surface 22t of the leading end portion 22 of the rotating shaft 2. In the example illustrated in FIG. 27, the attachment 51 is provided at a recess 32d (more specifically, a ring-shaped recess). The recess 32d is formed on the inner surface 32n of the through hole 3h.

As exemplified in FIG. 28, from the viewpoint of smoothly moving the rotating shaft 2 in a direction parallel to the first axis AX relative to the through hole 3h, the small gap G6 is preferably formed between the inner surface 51n of the attachment 51 and the outer surface 22t of the leading end portion 22. It is to be noted, however, that in a case where the contact between the inner surface 51n of the attachment 51 and the outer surface 22t of the leading end portion 22 does not interfere with the movement of the rotating shaft 2 in the direction parallel to the first axis AX, the gap G6 between the inner surface 51n and the outer surface 22t may be zero. It is also to be noted that a rolling element such as a ball and a roller or an elastic element such as an O-ring may be provided at one of the inner surface 51n of the attachment 51 and the outer surface 22t of the leading end portion 22.

In the examples illustrated in FIGs. 27 and 28, the state of the attachment 51 provided at the through hole 3h is changeable from a third state (see FIG. 27) and a fourth state (see FIG. 28). The third state is a state in which the third distance *L3* between the first axis AX and the innermost portion 511n of the attachment 51 is equal to or larger than the fourth distance *L4* between the first axis AX and the innermost surface 322n of the through hole 3h. The fourth state is a state in which the third distance *L3* between the first axis AX and the innermost portion 511n of the attachment 51 is smaller than the fourth distance *L4* between the first axis AX and the innermost surface 322n of the through hole 3h. In the third embodiment, however, the configuration in which the third state (see FIG. 27) can be realized is not essential.

In the example illustrated in FIG. 27, at least one of the attachment 51 and the through hole 3h has the inclined surface AS. The inclined surface AS converts the movement of the attachment 51 (for example, the second member 51-2 of the attachment 51) in a direction parallel to the first axis AX relative to the through hole 3h into a displacement of at least a part of the attachment 51 (for example, the first member 51-1 of the attachment 51) in a direction toward the first axis AX. In this case, by moving the attachment 51 in the direction parallel to the first axis AX (more specifically, the second direction *DR2*) relative to the through hole 3h, the gap G6 between the inner surface 51n of the attachment 51 and the outer surface 22t of the leading end portion 22 of the rotating shaft 2 reduces. By reducing the gap G6, the amount of displaceability of the leading end portion 22 of the rotating shaft 2 in the direction perpendicular to the first axis AX reduces.

In the example illustrated in FIG. 27, the attachment 51 includes the first member 51-1 and the second member 51-2. In a cross-section including the first axis AX, the first member 51-1 has a wedge shape. More specifically, the first member 51-1 has a wedge shape that becomes smaller in thickness in the first direction *DR1.* In a cross-section including the first axis AX, the second member 51-2 has a wedge shape. More specifically, the second member 51-2 has a wedge shape that becomes smaller in thickness in the second direction *DR2.* In the example illustrated in FIG. 27, the outer surface of the first member 51-1 has a fifth inclined surface ASS, and the inner surface of the second member 51-2 has a sixth inclined surface AS6. The sixth inclined surface AS6 is in contact with the fifth inclined surface ASS. The fifth inclined surface AS5 is an inclined surface that increases in distance from the first axis AX in the second direction *DR2.* The sixth inclined surface AS6 is an inclined surface that increases in distance from the first axis AX in the second direction *DR2.* In this case, by moving the second member 51-2 of the attachment 51 in the second direction *DR2* relative to the through hole 3h and the first member 51-1 of the attachment 51, the first member 51-1 of the attachment 51 is displaced in a direction toward the first axis AX. It is to be noted that a rolling element such as a ball and a roller or an elastic element such as an O-ring may be provided at one of the outer surface of the first member 51-1 and the inner surface of the second member 51-2.

In the example illustrated in FIG. 27, at least a part of the attachment 51 is diminishable in diameter in a direction toward the first axis AX. More specifically, the first member 51-1 of the attachment 51 provided at the through hole 3h is diminishable in diameter in a direction toward the first axis AX so that the third distance *L3* between the first axis AX and the innermost portion 511n of the attachment 51 is smaller than the fourth distance *L4* between the first axis AX and the innermost surface 322n of the through hole 3h. FIG. 28 illustrates a state in which the first member 51-1 of the attachment 51 is diminished diameter in a direction toward the first axis AX. In the example illustrated in FIG. 28, when the state of the first member 51-1 of the attachment 51 is a diminished diameter state, the first member 51-1 has an elastically deformed shape deformed from a default shape of the attachment 51.

In a case where at least a part of the attachment 51 (in other words, a part or whole of the attachment 51) is diminishable in diameter in a direction toward the first axis AX, the gap G6 between the inner surface 51n of the attachment 51 and the outer surface 22t of the leading end portion 22 of the rotating shaft 2 can be easily adjusted. It is to be noted that at least a part of the attachment 51 may be diminished in diameter after the leading end portion 22 of the rotating shaft 2 has been inserted into the through hole 3h or before the leading end portion 22 of the rotating shaft 2 is inserted into the through hole 3h.

The first member 51-1 of the attachment 51 may be a ring member (for example, a C-shaped ring member having a cut). In a case where the first member 51-1 is a C-shaped ring member, the first member 51-1 is easily diminishable in diameter in a direction toward the first axis AX. The second member 51-2 of the attachment 51 may be a ring member (for example, a circular ring member without a cut).

### (Pressing Member 55)

In the example illustrated in FIG. 27, the workpiece support 1C for a machine tool includes the pressing member 55, which presses the attachment 51 (more specifically, the second member 51-2) in the second direction *DR2.* By pressing the attachment 51 in the second direction *DR2,* the pressing member 55 moves the attachment 51 (more specifically, the second member 51-2) in a direction parallel to the first axis AX (more specifically, the second direction *DR2*) relative to the through hole 3h. Also, by pressing the attachment 51 (more specifically, the second member 51-2) in the second direction *DR2* using the pressing member 55 to move the attachment 51 in the second direction *DR2,* the inner surface 51n of the attachment 51 is displaced in a direction toward the outer surface 22t of the leading end portion 22 of the rotating shaft 2 (see FIG. 28). In this manner, the gap G6 between the inner surface 51n of the attachment 51 and the outer surface 22t of the leading end portion 22 reduces.

In the example illustrated in FIG. 28, by merely moving the pressing member 55 in the second direction *DR2,* the inner surface 51n of the attachment 51 is displaced in a direction toward the outer surface 22t of the leading end portion 22 of the rotating shaft 2. As a result, the gap G6 between the inner surface 51n of the attachment 51 and the outer surface 22t of the leading end portion 22 of the rotating shaft 2 reduces.

In the example illustrated in FIG. 27, the pressing member 55 includes the first thread portion 551, which converts the rotational force acting on the pressing member 55 into a pressing force to press the attachment 51. In other words, the pressing member 55 includes the threaded member 55a, which converts the rotational force acting on the pressing member 55 into a pressing force to press the attachment 51.

In the example illustrated in FIG. 27, the first thread portion 551 of the threaded member 55a is screwed with a female thread portion 31m of the rotation body 31. Also in the example illustrated in FIG. 27, the threaded member 55a is a bolt having the recess 552, which is engageable with a tool such as a wrench and a driver.

### (Method of Using Machine Tool)

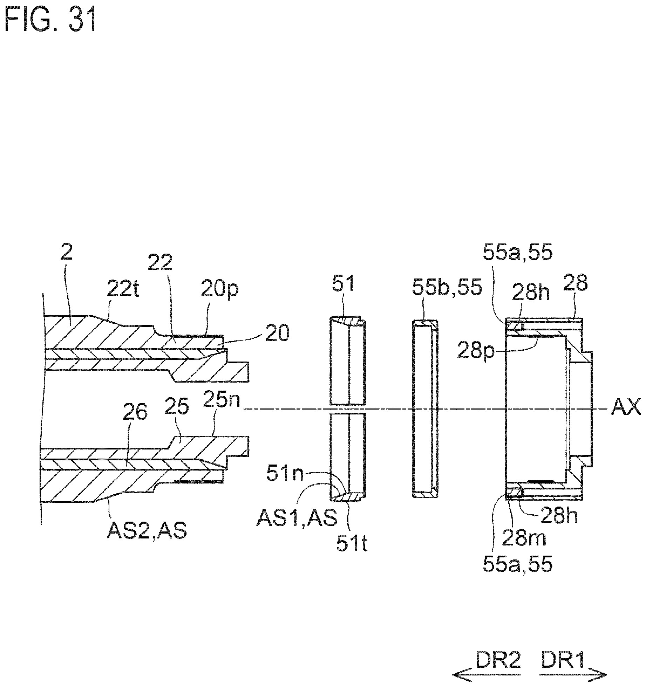

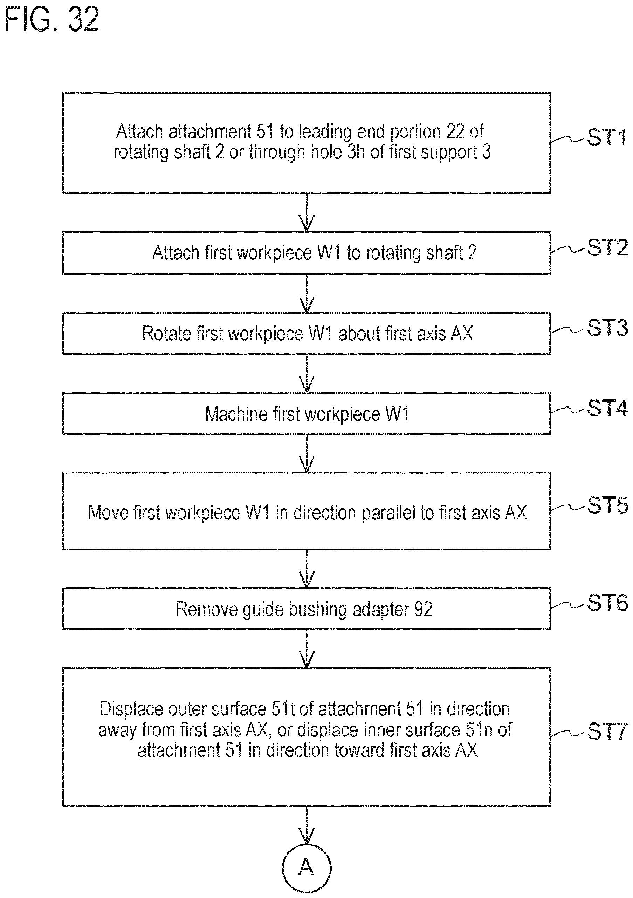

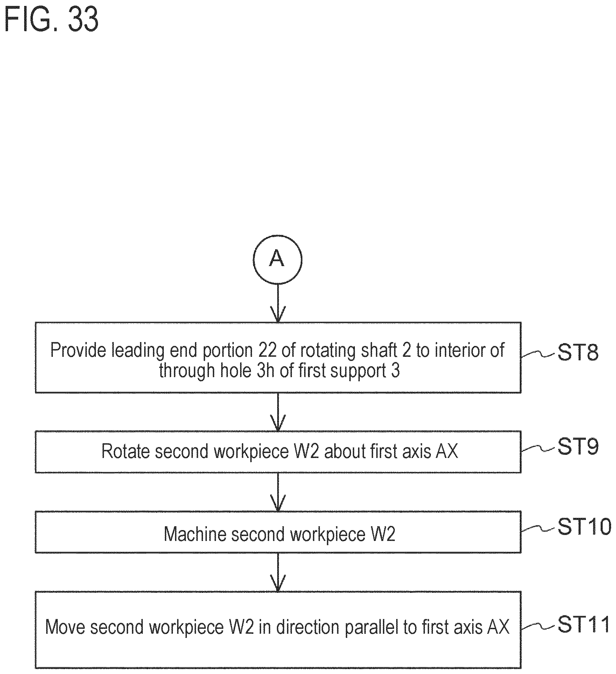

By referring to FIGs. 1 to 33, a method according to this embodiment of using a machine tool will be described. FIG. 31 illustrates an example procedure for attaching the attachment 51 to the leading end portion 22 of the rotating shaft 2. FIGs. 32 and 33 are flowcharts of an example of the method according to this embodiment of using a machine tool.

A machine tool 100 is used in the method according to this embodiment of using a machine tool. The machine tool 100 may be the machine tool 100A according to the first embodiment, the machine tool 100B according to the second embodiment, the machine tool 100C according to the third embodiment, or any other machine tool.

The machine tool 100 used in the method according to this embodiment of using a machine tool includes the workpiece support 1; the tool holder 110, which holds the tool T; and the second drive 120, which moves the tool holder 110. The workpiece support 1, the tool holder 110, and the second drive 120 have already been described in the first, second, or third embodiment, and description of these configurations will be omitted where otherwise a repetition occurs.

At first step ST1, the attachment 51 is attached to the leading end portion 22 of the rotating shaft 2 or the through hole 3h of the first support 3. First step ST1 is the attachment attaching step. By referring to FIG. 31, an example of the method of attaching the attachment 51 to the leading end portion 22 of the rotating shaft 2 will be described. At sub-step ST1-1, the attachment 51 is provided to the outer surface 22t of the leading end portion 22 of the rotating shaft 2. At sub-step ST1-2, the collar 55b is provided to the leading end portion 22 of the rotating shaft 2 so that an end portion of the attachment 51 at the first direction *DR1* side contacts the collar 55b. It is to be noted that as exemplified in FIG. 23, in a case where the collar 55b is omitted, sub-step ST1-2 is omitted. At sub-step ST1-3, the nut 28 (more specifically, a cap nut) is attached to the leading end portion of the rotating shaft body 20. By performing sub-step ST1-3, the attaching of the attachment 51 to the leading end portion 22 of the rotating shaft 2 is completed.

In the example illustrated in FIG. 31, the threaded member 55a is inserted in advance in the threaded hole 28h of the nut 28. In this case, by attaching the nut 28 to the leading end portion 22 of the rotating shaft 2, the threaded member 55a is provided to face the collar 55b or the attachment 51. Alternatively, as exemplified in FIG. 23, the threaded member 55a pressing the attachment 51 may be the nut 28 itself. In this case, by attaching the nut 28 to the leading end portion of the rotating shaft body 20, the nut 28 serving as the threaded member 55a is provided to face the collar 55b or the attachment 51.

At second step ST2, an elongate workpiece (in other words, the first workpiece W1) is attached to the rotating shaft 2. More specifically, at second step ST2, the first workpiece W1 is held by the collet 25, which is a part of the rotating shaft 2. Second step ST2 is the first workpiece attaching step.

At third step ST3, the first workpiece W1 is rotated about the first axis AX. Third step ST3 is the first rotating step. In the first rotating step, the first workpiece W1 held by the leading end portion 22 of the rotating shaft 2 and supported by the guide bushing unit 9 (more specifically, the guide bushing 91 of the guide bushing unit 9) attached to the through hole 3h is rotated about the first axis AX (see the arrow AR3 illustrated in FIG. 3, 19, or 25).

The first rotating step includes causing the spindle motor 7 to rotate the rotating shaft 2 about the first axis AX relative to the shaft support member 60. The first rotating step preferably includes causing the rotary drive 38 to rotate the rotation body 31, which holds the guide bushing adapter 92, about the second axis AX2 relative to the rotation body support member 33. The second axis AX2 is substantially coaxial with the first axis AX. In the first rotating step, the rotating shaft 2 and the rotation body 31, which holds the guide bushing adapter 92, are preferably rotated synchronously.

At fourth step ST4, the first workpiece W1 is machined by the tool T. Fourth step ST4 is the first machining step. The first machining step is performed during third step ST3 (first rotating step) (see FIG. 3, 19, or 25).

The first machining step is performed with the first workpiece W1 supported by both the leading end portion 22 of the rotating shaft 2 and the guide bushing 91. In this manner, bending of the first workpiece W1 is restricted, ensuring that the first workpiece W1 is machined highly accurately. In a case where the machine tool 100 includes the air supplier 8, the first machining step is preferably performed with the second air curtain J2 formed by the air discharged through the gap G5 between the rotation body 31 and the rotation body support member 33 (see FIG. 18).

At fifth step ST5, the first workpiece W1 is moved in a direction parallel to the first axis AX. Fifth step ST5 is the first moving step. In the first moving step, the rotating shaft 2 holding the first workpiece W1 is moved in a direction parallel to the first axis AX relative to the guide bushing 91 (see the arrow AR1 illustrated in FIG. 3, 19, or 25). By this relative movement, the machining position at which the first workpiece W1 is machined by the tool T is changed. The first moving step is performed during third step ST3 (first rotating step).

The first moving step includes causing the second support 6 to move the rotating shaft 2 in a direction parallel to the first axis AX.

At sixth step ST6, the guide bushing unit 9 (more specifically, the guide bushing adapter 92) is removed from the first support 3. Sixth step ST6 is the removing step of removing the guide bushing adapter. In the removing step, the guide bushing adapter 92 is removed from the through hole 3h of the first support 3 (see FIG. 4, 21, or 26).

At seventh step ST7, the outer surface 51t of the attachment 51, which is provided in contact with the outer surface 22t of the leading end portion 22 of the rotating shaft 2, is displaced in a direction away from the first axis AX. Seventh step ST7 is the displacing step. The displacing step may be performed using the inclined surface AS, which is provided at the attachment 51 and/or the rotating shaft 2. The inclined surface AS converts the movement of the attachment 51 in a direction parallel to the first axis AX into a displacement of the outer surface 51t of the attachment 51 in a direction away from the first axis AX (see FIG. 7 or 23). The movement of the attachment 51 in a direction parallel to the first axis AX may be performed by pressing the attachment 51 in the second direction *DR2* using the pressing member 55. In the displacing step, at least a part of the attachment 51 may be enlarged in diameter in a direction away from the first axis AX.

Alternatively, at seventh step ST7, the inner surface 51n of the attachment 51, which is provided in contact with the inner surface 32n of the through hole 3h, may be displaced in a direction toward the first axis AX. The seventh step ST7 (displacing step) may be performed using the inclined surface AS, which is provided at the attachment 51 and/or the through hole 3h. The inclined surface AS converts the movement of the attachment 51 in a direction parallel to the first axis AX into a displacement of the inner surface 51n of the attachment 51 in a direction toward the first axis AX (see FIG. 28). The movement of the attachment 51 in a direction parallel to the first axis AX may be performed by pressing the attachment 51 in the second direction *DR2* using the pressing member 55. In the displacing step, at least a part of the attachment 51 may be diminished in diameter in a direction toward the first axis AX.

The displacing step (seventh step ST7) is performed after the guide-bushing-adapter removing step (sixth step ST6). Alternatively, the displacing step (seventh step ST7) may be performed immediately after the attachment attaching step (first step ST1).

At eighth step ST8, the leading end portion 22 of the rotating shaft 2 (for example, the rotating shaft 2 attached with the attachment 51) is provided to the interior of the through hole 3h of the first support 3. Eighth step ST8 is the providing step. The providing step includes moving the rotating shaft 2 in a direction parallel to the first axis AX to provide the leading end portion 22 of the rotating shaft 2 to the interior of the through hole 3h (more specifically, the first region RG1 of the interior of the through hole 3h occupied by the guide bushing unit 9). The providing step also includes causing the second support 6 to move the rotating shaft 2 in a direction parallel to the first axis AX.

The providing step may include changing the position of the leading end portion 22 of the rotating shaft 2 from the first position (see FIG. 4) to the second position (see FIG. 5). The first position is further in the second direction *DR2* than the end 3e of the through hole 3h of the first support 3 which end 3e is at the second direction *DR2* side. The second position is further in the first direction *DR1* than the end 3e of the through hole 3h which end 3e is at the second direction *DR2* side. Alternatively, the providing step may include changing the position of the leading end portion 22 of the rotating shaft 2 from the second region RG2 (see FIG. 20) of the interior of the through hole 3h of the first support 3 to the first region RG1 (see FIG. 22) of the interior of the through hole 3h.

At ninth step ST9, the second workpiece W2 is rotated about the first axis AX. Ninth step ST9 is the second rotating step. In the second rotating step, the leading end portion 22 of the rotating shaft 2 is rotated about the first axis AX together with the second workpiece W2 held by the leading end portion 22 (see the arrow AR4 illustrated in FIG. 14, 22, or 29). It is to be noted that the second workpiece W2 may be a workpiece obtained by cutting the leading end portion of the first workpiece W1 to become a part separate from the rest of the first workpiece W1 (in other words, the second workpiece W2 may be a part of the first workpiece W1), or that the second workpiece W2 may be a workpiece completely different from the first workpiece W1.

The second rotating step includes causing the spindle motor 7 to rotate the rotating shaft 2 about the first axis AX relative to the shaft support member 60. The second rotating step preferably includes causing the rotary drive 38 to rotate the rotation body 31 with the guide bushing adapter 92 removed therefrom about the second axis AX2 relative to the rotation body support member 33. The second axis AX2 is substantially coaxial with the first axis AX. Also in the second rotating step, the rotating shaft 2 and the rotation body 31 with the guide bushing adapter 92 removed therefrom are preferably rotated synchronously.

At tenth step ST10, the second workpiece W2 is machined by the tool T. Tenth step ST10 is the second machining step. The second machining step is performed during ninth step ST9 (second rotating step) (see FIG. 14, 22, or 29).

As exemplified in FIGs. 7 and 23, the second machining step is performed in a state in which the first distance *L1* between the first axis AX and the outermost portion 511t of the attachment 51 is larger than the second distance *L2* between the first axis AX and the outermost surface 222t of the leading end portion 22 of the rotating shaft 2. Alternatively, as exemplified in FIG. 28, the second machining step is performed in a state in which the third distance *L3* between the first axis AX and the innermost portion 511n of the attachment 51 is smaller than the fourth distance *L4* between the first axis AX and the innermost surface 322n of the through hole 3h. The second machining step is performed in a state in which the amount of displaceability of the leading end portion 22 of the rotating shaft 2 in a direction perpendicular to the first axis AX is reduced by the attachment 51. In this manner, bending of the rotating shaft 2 is restricted, ensuring that the second workpiece W2 is machined highly accurately.

In a case where the machine tool 100 includes the air supplier 8, the second machining step is performed with the first air curtain J1 formed by the air discharged through the gap G4 between the inner surface 32n of the through hole 3h and the outer surface of the leading end portion 22 of the rotating shaft 2 (see FIG. 16 or 28). The second machining step is preferably performed with the second air curtain J2 formed by the air discharged through the gap G5 between the rotation body 31 and the rotation body support member 33.

At eleventh step ST11, the second workpiece W2 is moved in a direction parallel to the first axis AX. Eleventh step ST11 is the second moving step. In the second moving step, the rotating shaft 2 holding the second workpiece W2 is moved in a direction parallel to the first axis AX relative to the through hole 3h of the first support 3 (see the arrow AR2 illustrated in FIG. 14, 22, or 29). By this relative movement, the machining position at the second workpiece W2 is machined by the tool T is changed. The second moving step is performed during ninth step ST9 (second rotating step).

The second moving step includes causing the second support 6 to move the rotating shaft 2 in a direction parallel to the first axis AX.

As has been described hereinbefore, in the method according to this embodiment of using a machine tool, the first workpiece W1 is machined with the first workpiece W1 supported by both the leading end portion 22 of the rotating shaft 2 and the guide bushing 91. In this manner, bending of the first workpiece W1 is restricted, ensuring that the first workpiece W1 is machined highly accurately. Also in the method according to this embodiment of using a machine tool, the second workpiece W2 is machined with the amount of displaceability of the leading end portion 22 of the rotating shaft 2 reduced in a direction perpendicular to the first axis AX. In this manner, bending of the rotating shaft 2 is restricted, ensuring that the second workpiece W2 is machined highly accurately.

The present invention will not be limited to the and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

### Reference Signs List

1, 1A, 1B, 1C ... Workpiece support, 2 ... Rotating shaft, 3 ... First support, 3e ... End of through hole, 3h ... Through hole, 6 ... Second support, 7 ... Spindle motor, 8 ... Air supplier, 9 ... Guide bushing unit, 20 ... Rotating shaft body, 20p ... Male thread portion, 21 ... Rear end portion, 22 ... Leading end portion, 22t ... Outer surface, 23 ... Center portion, 24 ... Engagement portion, 25 ... Collet, 25e ... Leading end portion, 25n ... Inner surface, 26 ... Collet operation shaft, 27 ... Operation shaft drive, 28 ... Nut, 28h ... Threaded hole, 28m ... Second thread portion, 28p ... Female thread portion, 29 ... Urging member, 31 ... Rotation body, 31m ... Female thread portion, 32d ... Recess, 32n ... Inner surface, 33 ... Rotation body support member, 35 ... Second bearing group, 36 ... Engagement member, 38 ... Rotary drive, 41 ... First bearing group, 41a ... First bearing, 41b ... Second bearing, 51 ... Attachment, 51-1 ... First member, 51-2 ... Second member, 51A, 51B ... Ring member, 51n ... Inner surface, 51r ... Cut, 51t... Outer surface, 55 ... Pressing member, 55a ... Threaded member, 55b ... Collar, 60 ... Shaft support member, 60b ... Block, 66 ... First drive, 71 ... Stator, 72 ... Rotor, 91 ... Guide bushing, 91h ... Through hole, 92 ... Guide bushing adapter, 100, 100A, 100B, 100C ... Machine tool, 110 ... Tool holder, 120 ... Second drive, 222t ... Outermost surface, 321n ... Tapered inner surface, 322n ... Innermost surface, 324 ... Air conduit, 324a ... Part of air conduit, 325 ... Ejection opening, 381 ... Second motor, 383 ... Transmission belt, 511n ... Innermost portion, 511t ... Outermost portion, 515 ... Ring body, 516 ... Leg, 551 ... First thread portion, 552 ... Recess, 661 ... First motor, 663 ... Thread axis, AS ... Inclined surface, AS1 ... First inclined surface, AS2 ... Second inclined surface, AS3 ... Third inclined surface, AS4 ... Fourth inclined surface, AS5 ... Fifth inclined surface, AS6 ... Sixth inclined surface, G1, G2, G3, G4, G5, G6 ... Gap, J1 ... First air curtain, J2 ... Second air curtain, K ... Tool, M1 ... Groove, M2 ... Protrusion, T ... Tool, W ... Workpiece, W1 ... First workpiece, W2 ... Second workpiece, Wa ... First portion of workpiece, Wb ... Second portion of workpiece

## Claims

1. A workpiece support for a machine tool, the workpiece support comprising:
a rotating shaft configured to support a workpiece and rotatable about a first axis;
a first support that has a through hole capable of supporting a guide bushing adapter configured to hold a guide bushing and that is configured to receive a leading end portion of the rotating shaft in the through hole;
a second support supporting the rotating shaft and configured to move the rotating shaft in a direction parallel to the first axis relative to the first support; and
an attachment provided in contact with an outer surface of the leading end portion of the rotating shaft or an inner surface of the through hole,
wherein
at least a part of the attachment is displaceable in a direction away from the first axis so that a first distance between the first axis and an outermost portion of the attachment provided at the leading end portion of the rotating shaft is larger than a second distance between the first axis and an outermost surface of the leading end portion of the rotating shaft,
or
at least the part of the attachment is displaceable in a direction toward the first axis so that a third distance between the first axis and an innermost portion of the attachment provided in the through hole is smaller than a fourth distance between the first axis and an innermost surface of the through hole.

2. The workpiece support for a machine tool, according to claim 1,
wherein
a state of the attachment provided at the rotating shaft is changeable from a first state in which the first distance is equal to or smaller than the second distance to a second state in which the first distance is larger than the second distance,
or
the state of the attachment provided in the through hole is changeable from a third state in which the third distance is equal to or larger than the fourth distance to a fourth state in which the third distance is smaller than the fourth distance.

3. The workpiece support for a machine tool, according to claim 1 or 2, wherein
at least the part of the attachment provided at the rotating shaft is enlargeable in diameter in the direction away from the first axis so that the first distance is larger than the second distance,
or
at least the part of the attachment provided in the through hole is diminishable in diameter in the direction toward the first axis so that the third distance is smaller than the fourth distance.

4. The workpiece support for a machine tool, according to any one of claims 1 to 3, wherein
at least one of the attachment and the rotating shaft has an inclined surface that converts a movement of the attachment in the direction parallel to the first axis relative to the rotating shaft into a displacement of at least the part of the attachment in the direction away from the first axis,
or
at least one of the attachment and the through hole has an inclined surface that converts the movement of the attachment in the direction parallel to the first axis relative to the through hole into a displacement of at least the part of the attachment in the direction toward the first axis.

5. The workpiece support for a machine tool, according to claim 4, further comprising a pressing member configured to press the attachment in a direction from the leading end portion of the rotating shaft toward a rear end portion of the rotating shaft to move the attachment in the direction parallel to the first axis relative to the rotating shaft or relative to the through hole.

6. The workpiece support for a machine tool, according to claim 5, wherein the pressing member comprises a threaded member configured to convert a rotational force acting on the pressing member into a pressing force to press the attachment.

7. The workpiece support for a machine tool, according to any one of claims 1 to 6, wherein the attachment comprises a ring member.

8. The workpiece support for a machine tool, according to any one of claims 1 to 7, wherein the rotating shaft comprises
a rotating shaft body,
a collet configured to hold the workpiece, and
a nut configured to prevent the collet from being removed from the rotating shaft body and prevent the attachment from being removed from the rotating shaft body.

9. The workpiece support for a machine tool, according to any one of claims 1 to 8, wherein with the attachment being attached to the leading end portion of the rotating shaft or the through hole of the first support, the leading end portion of the rotating shaft is movable from an outside of the through hole to an interior of the through hole.

10. The workpiece support for a machine tool, according to any one of claims 1 to 9, further comprising a spindle motor configured to rotate the rotating shaft about the first axis,
wherein the second support comprises
a shaft support member supporting the rotating shaft rotatably about the first axis, and
a first drive configured to move the shaft support member in the direction parallel to the first axis, and
wherein the first drive is configured to move the rotating shaft, the shaft support member, and the spindle motor in the direction parallel to the first axis relative to the first support.

11. The workpiece support for a machine tool, according to any one of claims 1 to 8,
wherein the second support comprises
a shaft support member supporting the rotating shaft rotatably about the first axis, and
a first drive configured to move the shaft support member in the direction parallel to the first axis,
wherein the first support comprises a spindle motor configured to rotate the rotating shaft about the first axis relative to the shaft support member, and
wherein the first drive is configured to move the rotating shaft and the shaft support member in the direction parallel to the first axis relative to the first support and the spindle motor.

12. The workpiece support for a machine tool, according to claim 11, wherein the workpiece is supportable by the guide bushing provided in a first region of an interior of the through hole of the first support and by the leading end portion of the rotating shaft provided in a second region of the interior of the through hole.

13. The workpiece support according to any one of claims 1 to 12, wherein an ejection opening through which air supplied from an air supplier is injected is formed at an inner circumferential surface of the through hole of the first support.

14. A machine tool comprising:
a workpiece support;
a tool holder configured to hold a tool; and
a second drive configured to move the tool holder,
wherein the workpiece support comprises
a rotating shaft configured to support a workpiece and rotatable about a first axis,
a first support that has a through hole capable of supporting a guide bushing adapter configured to hold a guide bushing and that is configured to receive a leading end portion of the rotating shaft in the through hole,
a second support supporting the rotating shaft and configured to move the rotating shaft in a direction parallel to the first axis relative to the first support, and
an attachment provided in contact with an outer surface of the leading end portion of the rotating shaft or an inner surface of the through hole, and
wherein
at least a part of the attachment is displaceable in a direction away from the first axis so that a first distance between the first axis and an outermost portion of the attachment provided at the leading end portion of the rotating shaft is larger than a second distance between the first axis and an outermost surface of the leading end portion of the rotating shaft,
or
at least the part of the attachment is displaceable in a direction toward the first axis so that a third distance between the first axis and an innermost portion of the attachment provided in the through hole is smaller than a fourth distance between the first axis and an innermost surface of the through hole.

15. A method of using a machine tool,
the machine tool comprising:
a workpiece support;
a tool holder configured to hold a tool; and
a second drive configured to move the tool holder,
the workpiece support comprising:
a rotating shaft rotatable about a first axis;
a first support that has a through hole capable of supporting a guide bushing adapter configured to hold a guide bushing and that is configured to receive a leading end portion of the rotating shaft in the through hole;
a second support supporting the rotating shaft and configured to move the rotating shaft in a direction parallel to the first axis relative to the first support; and
an attachment provided in contact with an outer surface of the leading end portion of the rotating shaft or an inner surface of the through hole,
the method comprising:
a first rotating step of rotating a first workpiece about the first axis with the first workpiece being held by the leading end portion of the rotating shaft and being supported by the guide bushing;
a first machining step of machining the first workpiece using the tool while performing the first rotating step;
a removing step of removing the guide bushing adapter from the through hole;
a providing step of moving the rotating shaft in the direction parallel to the first axis to provide the leading end portion of the rotating shaft at an interior of the through hole;
a second rotating step of rotating the leading end portion of the rotating shaft about the first axis together with a second workpiece held by the leading end portion; and
a second machining step of machining the second workpiece using the tool while performing the second rotating step,
wherein the second machining step is performed in a state in which a first distance between the first axis and an outermost portion of the attachment provided at the leading end portion of the rotating shaft is larger than a second distance between the first axis and an outermost surface of the leading end portion of the rotating shaft,
or
a third distance between the first axis and an innermost portion of the attachment provided in the through hole is smaller than a fourth distance between the first axis and an innermost surface of the through hole.
